# EUROPEAN PATENT APPLICATION

(11) **EP 3 116 091 A1**
(43) Date of publication of application: **11.01.2017**
(21) Application number: 15174446.3
(22) Date of filing: 30.06.2015
(51) Int. Cl.: H02J 5/00, H01F 38/14, H02J 7/02

(54) **ELECTRICALLY CONDUCTIVE COIL PAIR CONFIGURED TO BE COUPLED TO A HOUSING**

(71) Applicant: Nokia Technologies Oy, 02610 Espoo (FI)
(72) Inventor: CARGONJA, Nikola, San Carlos, CA California 94070 (US); BRAND, Tim, Cupertino, CA California 95014 (US)
(74) Representative: Nokia Corporation

(57) **Abstract**

An apparatus comprising a first electrically conductive coil pair configured to be coupled a housing outside to an inner surface of a side portion of the housing, the housing comprising a top portion and the side portion, the side portion extending upward to the top portion, the top portion being open and a second electrically conductive coil pair configured to be coupled to the housing outside of the inner surface is disclosed.

## Description

### TECHNICAL FIELD

The present application relates generally to an electrically conductive coil pair configured to be coupled to a housing.

### BACKGROUND

In modern times, electronic apparatus are often powered by electrical batteries, electrical cells, and/or the like. Such electronic devices need to have their power sources occasionally recharged. As such, it may be desirable to configure an apparatus such that the apparatus facilitates charging of an electronic apparatus in an easy and intuitive manner.

### SUMMARY

Various aspects of example embodiments are set out in the summary, the drawings, the detailed description, and the claims.

One or more example embodiments may provide an apparatus comprising a housing comprising a top portion and a side portion, the side portion extending upward to the top portion, the top portion being open and the side portion comprising an inner surface, a first electrically conductive coil pair coupled to the housing outside of the inner surface comprising a first electrically conductive coil that is shaped to substantially conform with the inner surface around a first electrically conductive coil center point, and; a second electrically conductive coil that is shaped to substantially conform with the inner surface around a second electrically conductive coil center point, the first electrically conductive coil center point and the second electrically conductive coil center point being on a first axis that horizontally bisects the side portion of the housing; a second electrically conductive coil pair coupled to the housing outside of the inner surface comprising a third electrically conductive coil that is shaped to substantially conform with the inner surface around a third electrically conductive coil center point such that the third electrically conductive coil partially overlaps with the first electrically conductive coil and partially overlaps with the second electrically conductive coil, and a fourth electrically conductive coil that is shaped to substantially conform with the inner surface around a fourth electrically conductive coil center point such that the fourth electrically conductive coil partially overlaps with the first electrically conductive coil and partially overlaps with the second electrically conductive coil, the third electrically conductive coil center point and the fourth electrically conductive coil center point being on a second axis that horizontally bisects the side portion of the housing, the second axis being different from the first axis.

One or more example embodiments may provide an apparatus comprising a first electrically conductive coil pair configured to be coupled to a housing outside of an inner surface of a side portion of the housing, the housing comprising a top portion and the side portion, the side portion extending upward to the top portion, the top portion being open, the first electrically conductive coil pair comprising a first electrically conductive coil that is shaped to substantially conform with the inner surface around a first electrically conductive coil center point, and a second electrically conductive coil that is shaped to substantially conform with the inner surface around a second electrically conductive coil center point, the first electrically conductive coil center point and the second electrically conductive coil center point being on a first axis that horizontally bisects the side portion of the housing; a second electrically conductive coil pair configured to be coupled to the housing outside of the inner surface comprising a third electrically conductive coil that is shaped to substantially conform with the inner surface around a third electrically conductive coil center point such that the third electrically conductive coil partially overlaps with the first electrically conductive coil and partially overlaps with the second electrically conductive coil, and a fourth electrically conductive coil that is shaped to substantially conform with the inner surface around a fourth electrically conductive coil center point such that the fourth electrically conductive coil partially overlaps with the first electrically conductive coil and partially overlaps with the second electrically conductive coil, the third electrically conductive coil center point and the fourth electrically conductive coil center point being on a second axis that horizontally bisects the side portion of the housing, the second axis being different from the first axis.

One or more example embodiments further comprise the housing.

In at least one example embodiment, the first electrically conductive coil pair is coupled to the housing outside the inner surface, and the second electrically conductive coil pair is coupled to the housing outside the inner surface.

In at least one example embodiment, the first axis is a horizontal axis.

In at least one example embodiment, the second axis is a horizontal axis.

In at least one example embodiment, the first axis is perpendicular to the second axis.

In at least one example embodiment, the first axis is a housing axis.

In at least one example embodiment, the second axis is a housing axis.

In at least one example embodiment, the first electrically conductive coil is directly electrically coupled to the second electrically conductive coil.

In at least one example embodiment, the third electrically conductive coil is directly electrically coupled to the fourth electrically conductive coil.

In at least one example embodiment, an electrically conductive coil center point corresponds with the geometric center of the electrically conductive coil.

In at least one example embodiment, an electrically conductive coil center point corresponds with the geometric center of a space encircled by the electrically conductive coil.

In at least one example embodiment, the side portion is configured to at least partially prevent objects from permeating sideways through the housing.

In at least one example embodiment, the housing comprises a container such that the side portion is a side portion of the container.

In at least one example embodiment, the housing further comprises a lid that at least partially covers the container at the top portion of the housing.

In at least one example embodiment, housing fails to comprise a lid that at least partially covers the container at the top portion of the housing.

In at least one example embodiment, the container at least partially surrounds a contained space by way of the side portion.

In at least one example embodiment, the inner surface faces the contained space.

In at least one example embodiment, the inner surface is a surface that is external to the housing and faces the contained space.

In at least one example embodiment, the housing further comprises another side portion that is outward from the side portion.

In at least one example embodiment, at least part of the first electrically conductive coil pair and at least part of the second electrically conductive coil pair is between the side portion and the other side portion

In at least one example embodiment, the housing further comprises a bottom portion below the top portion.

In at least one example embodiment, the housing further comprises at least one edge between the bottom portion and the side portion.

In at least one example embodiment, the side portion tapers inward from the top portion to the bottom portion.

In at least one example embodiment, the side portion is tapered inward from the top portion to form at least part of a bowl.

In at least one example embodiment, the inner surface is an inner surface of the bowl.

In at least one example embodiment, each coil pair is coupled to a surface of the side portion that is opposite to the inner surface.

In at least one example embodiment, the housing further comprises a lid that at least partially covers the top portion of the housing.

In at least one example embodiment, the housing fails to comprise a lid that at least partially covers the top portion of the housing.

In at least one example embodiment, the first axis horizontally bisects the side portion of the housing such that the first axis lies on a plane that demarcates a leftward part of the side portion from a rightward part of the side portion and the second axis horizontally bisects the side portion of the housing such that the second axis lies on a plane that demarcates a frontward part of the side portion from a rearward part of the side portion.

In at least one example embodiment, each electrically conductive coil is configured to be coupled to the housing outside of the inner surface.

In at least one example embodiment, each electrically conductive coil pair is configured to be coupled to the side portion of the housing.

In at least one example embodiment, each electrically conductive coil is configured to be coupled to the side portion of the housing.

In at least one example embodiment, the electrically conductive coil is shaped to substantially conform to the inner surface such that each consecutive winding of the electrically conductive coil conforms to a contour of the inner surface that is opposite to a part of the housing to which the electrically conductive coil is coupled.

In at least one example embodiment, the contour of the inner surface corresponds with a curve fitted approximation of the inner surface.

In at least one example embodiment, the contour of the inner surface fails to directly mimic the inner surface.

In at least one example embodiment, the electrically conductive coil is shaped to substantially conform to the inner surface such that each consecutive winding of the electrically conductive coil conforms to a contour of the inner surface that is opposite to a part of the side portion of the housing to which the electrically conductive coil is coupled

In at least one example embodiment, each electrically conductive coil is helically wound outward from the inner surface.

In at least one example embodiment, partially overlapping comprises overlapping at perpendicular angles.

In at least one example embodiment, partially overlapping comprises crossing at two points.

In at least one example embodiment, the crossing is at substantially perpendicular angles.

One or more example embodiments further comprise a first driver circuit that is configured to actuate the first electrically conductive coil pair, and second driver circuit that is configured to actuate the second electrically conductive coil pair.

One or more example embodiments further comprise a control circuit that is configured to preclude simultaneous actuation by the first driver circuit and the second driver circuit.

One or more example embodiments further comprise a fifth electrically conductive coil that is wound around a vertical axis of the housing.

One or more example embodiments further comprise a sixth electrically conductive coil that is wound around the vertical axis of the housing and electrically coupled with the fifth electrically conductive coil such that a third electrically conductive coil pair comprises the fifth electrically conductive coil and the sixth electrically conductive coil.

In at least one example embodiment, the fifth electrically conductive coil partially overlaps with the first electrically conductive coil, partially overlaps with the second electrically conductive coil, partially overlaps with the third electrically conductive coil, and partially overlaps with the fourth electrically conductive coil.

In at least one example embodiment, the sixth electrically conductive coil partially overlaps with the first electrically conductive coil, partially overlaps with the second electrically conductive coil, partially overlaps with the third electrically conductive coil, and partially overlaps with the fourth electrically conductive coil.

One or more example embodiments further comprise a third driver circuit that is configured to actuate the third electrically conductive coil pair.

One or more example embodiments further comprise a control circuit that is configured to preclude simultaneous actuation by the first driver circuit, the second driver circuit, and the third driver circuit.

### BRIEF DESCRIPTION OF THE DRAWINGS

For a more complete understanding of one or more example embodiments, reference is now made to the following descriptions taken in connection with the accompanying drawings in which:
FIGS. 1A-1E are diagrams illustrating apparatus housings according to at least one example embodiment;
FIG. 2 is a diagram illustrating a wireless charging apparatus according to at least one example embodiment;
FIGS. 3A-3B are diagrams illustrating containers according to at least one example embodiment;
FIGS. 4A-4C are diagrams illustrating electrically conductive coils according to at least one example embodiment;
FIGS. 5A-5F are diagrams illustrating electrically conductive coil pairs configured to be coupled to a housing according to at least one example embodiment;
FIGS. 6A-6C are diagrams illustrating inner surface contours according to at least one example embodiment;
FIGS. 7A-7D are diagrams illustrating partial overlapping of electrically conductive coils according to at least one example embodiment; and
FIGS. 8A-8C are diagrams illustrating driver circuits according to at least one example embodiment.

### DETAILED DESCRIPTION OF THE DRAWINGS

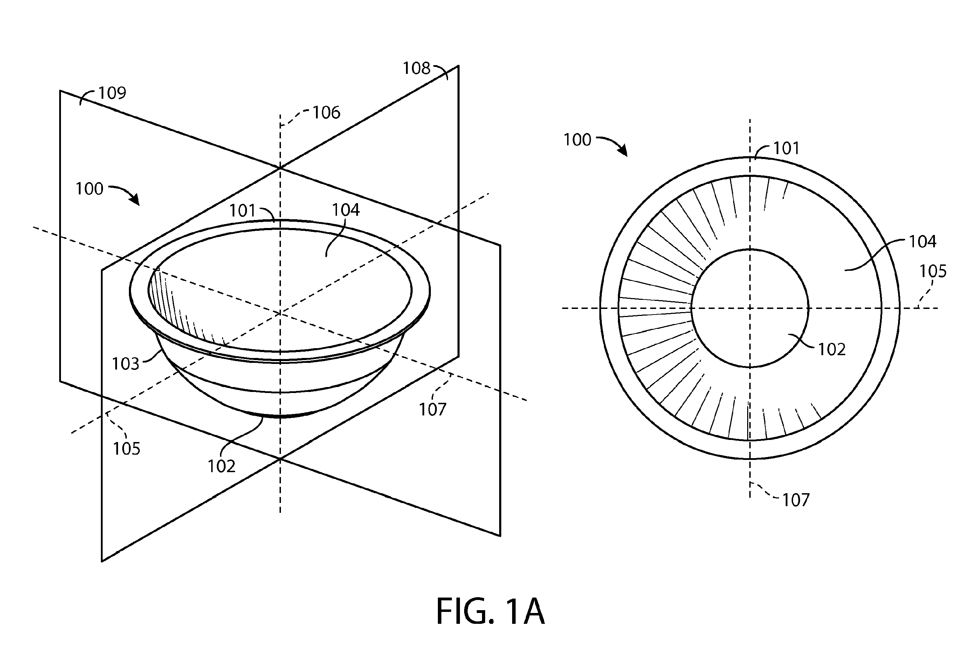

Various example embodiments and some of their potential advantages are understood by referring to FIGS. 1A through 8C of the drawings.

Some example embodiments will now further be described hereinafter with reference to the accompanying drawings, in which some, but not all, example embodiments are shown. One or more example embodiments may be embodied in many different forms and the claims should not be construed as being strictly limited to the example embodiments set forth herein; rather, these example embodiments are provided so that this disclosure will satisfy applicable legal requirements. Like reference numerals refer to like elements throughout. As used herein, the terms "data," "content," "information," and similar terms may be used interchangeably to refer to data capable of being transmitted, received and/or stored in accordance with one or more example embodiments. Thus, use of any such terms should not be taken to limit the spirit and scope of example embodiments.

Additionally, as used herein, the term 'circuitry' refers to (a) hardware-only circuit implementations (e.g., implementations in analog circuitry, digital circuitry and/or any combination thereof); (b) combinations of circuits and computer program product(s) comprising software and/or firmware instructions stored on one or more computer readable memories that work together to cause an apparatus to perform one or more functions described herein; and (c) circuits, such as, for example, a microprocessor(s) or a portion of a microprocessor(s), that utilize software or firmware for operation even if the software or firmware is not physically present. This definition of 'circuitry' applies to all uses of this term herein, including in any claims. As a further example, as used herein, the term 'circuitry' also includes an implementation comprising one or more processors and/or portion(s) thereof and accompanying software and/or firmware. As another example, the term 'circuitry' as used herein also includes, for example, a baseband integrated circuit, an applications processor integrated circuit, a cellular network apparatus, other network apparatus, and/or other computing apparatus.

As defined herein, a "non-transitory computer readable medium," which refers to a physical medium (e.g., volatile or non-volatile memory device), can be differentiated from a "transitory computer-readable medium," which refers to an electromagnetic signal. In at least one example embodiment, a non-transitory computer readable medium is a tangible non-transitory computer readable medium.

Some example embodiments may comprise an electronic apparatus, may be an electronic apparatus, and/or the like. The apparatus of at least one example embodiment need not be the entire electronic apparatus, but may be a component or group of components of the electronic apparatus in other example embodiments. For example, the apparatus may be an integrated circuit, a set of integrated circuits, and/or the like.

In at least one example embodiment, an electronic apparatus comprises at least one processor and at least one memory. The processor may be any type of processor, controller, embedded controller, processor core, and/or the like. In at least one example embodiment, the processor utilizes computer program code to cause an apparatus to perform one or more actions. The memory may comprise volatile memory, such as volatile Random Access Memory (RAM) including a cache area for the temporary storage of data and/or other memory, for example, non-volatile memory, which may be embedded and/or may be removable. The non-volatile memory may comprise an EEPROM, flash memory and/or the like. The memory may store any of a number of pieces of information, and data. The information and data may be used by the electronic apparatus to implement one or more functions of the electronic apparatus, such as the functions described herein. In at least one example embodiment, the memory includes computer program code such that the memory and the computer program code are configured to, working with the processor, cause the apparatus to perform one or more actions described herein.

FIGS. 1A-1E are diagrams illustrating apparatus housings according to at least one example embodiment. The examples of FIGS. 1A-1E are merely examples and do not limit the scope of the claims. For example, housing size may vary, housing shape may vary, housing configuration may vary, and/or the like.

Often times, an apparatus, such as an electronic apparatus, may utilize a charging device, such as a wireless charging apparatus, an AC power supply, and/or the like, to supply power to a power supply comprised by the electronic apparatus. The power supply comprised by the electronic apparatus may be an electrical cell, a battery, an electrical battery pack, a capacitor, and/or the like. Such charging devices may often comprise a housing to mechanically support the charging device, the electronic apparatus, and/or the like. A housing may refer to a mechanical structure of an apparatus. For example, a housing may be used to provide support for individual components of the apparatus, may be shaped such that the apparatus may be integrated with, coupled to, placed in, and/or the like a different apparatus, may enable the apparatus to perform a particular function, and/or the like. In this manner, a housing of a particular size, shape, configuration, and/or the like may be utilized in conjunction with a particular apparatus. A housing comprising a particular shape may have a preferred orientation, a particular orientation in which the housing operates as intended and/or as designed, and/or the like. In circumstances such as these, the shape of the housing may reflect a particular orientation. For example, a housing may comprise a top portion, a side portion, and/or the like. A top portion of a housing may refer to a portion of the housing above a geometric center of the housing. A side portion of a housing may refer to a portion of the housing outward from a geometric center of the housing. A bottom portion of a housing may refer to a portion of the apparatus below a top portion of housing. In some circumstances, a bottom portion of a housing may comprise a side portion of the housing, a top portion of the housing may comprise a side portion of the housing, and/or the like. Various portions of a housing may have a particular shape, such as a bowl shape, a cylindrical shape, a polygonal shape, and/or the like. In at least one example embodiment, a side portion of a housing is tapered inward from a top portion to form at least part of a bowl.

The example of FIG. 1A illustrates a perspective and a top down view of housing 100. It can be seen in the example of FIG. 1A that housing 100 comprises a bowl configuration. A bowl configuration of a housing may refer to a housing comprising an open top portion, a closed bottom portion, a side portion extending upward to the top portion and tapering inward toward the bottom portion, and an inner surface comprised by the side portion. An inner surface may refer to a surface of a side portion of a housing that at least partially faces another surface of the housing, at least partially faces itself, and/or the like. It can be seen in the example of FIG. 1A that housing 100 comprises top portion 101, bottom portion 102, side portion 103, and inner surface 104. Even though FIG. 1A illustrates side portion 103 as distinct from top portion 101 and bottom portion 102, it should understood that in some circumstances, a bottom portion, a top portion, and/or a side portion may be indistinct portions, a single portion with a top, a side, and/or a bottom configuration, a continuous portion with a top, a side, and/or a bottom configuration, and/or the like. Even though FIG. 1A illustrates side portion 103 tapering inward toward bottom portion 102 with a curved taper, it should be understood that a tapering be a straight tapering, a non-curved tapering, an angled tapering, and/or the like. It can be seen in the example of FIG. 1A that inner surface 104 is an inner surface of a bowl. It can be seen that housing 100 comprises an edge between bottom portion 102 and side portion 103. It should be understood that a housing may be absent an edge between a bottom portion and a side portion.

Various axes may bisect a housing. For example, FIG. 1A illustrates abscissa axis 105, ordinate axis 106, and applicate axis 107 which intersect at the approximate geometric center of housing 100. In this manner, abscissa axis 105, ordinate axis 106, and applicate axis 107 bisect housing 100. In the example of FIG. 1A, it can be seen that abscissa axis 105 is a horizontal axis that is perpendicular to ordinate axis 106 and applicate axis 107, ordinate axis 106 is a vertical axis that is perpendicular to abscissa axis 105 and applicate axis 107, and applicate axis 107 is a horizontal axis that is perpendicular to abscissa axis 105 and ordinate axis 106. An axis that bisects a housing may be described as a housing axis.

In the example of FIG. 1A, it can be seen that abscissa axis 105 horizontally bisects side portion 103 of housing 100 such that abscissa axis 105 lies on plane 108. It can be seen that in the example of FIG. 1A, plane 108 demarcates a frontward part of side portion 103 from a rearward part of side portion 103. In the example of FIG. 1A, it can be seen that applicate axis 107 horizontally bisects side portion 103 of housing 100 such that applicate axis 107 lies on plane 109. It can be seen that in the example of FIG. 1A, plane 109 demarcates a leftward part of side portion 103 from a rightward part of side portion 103.

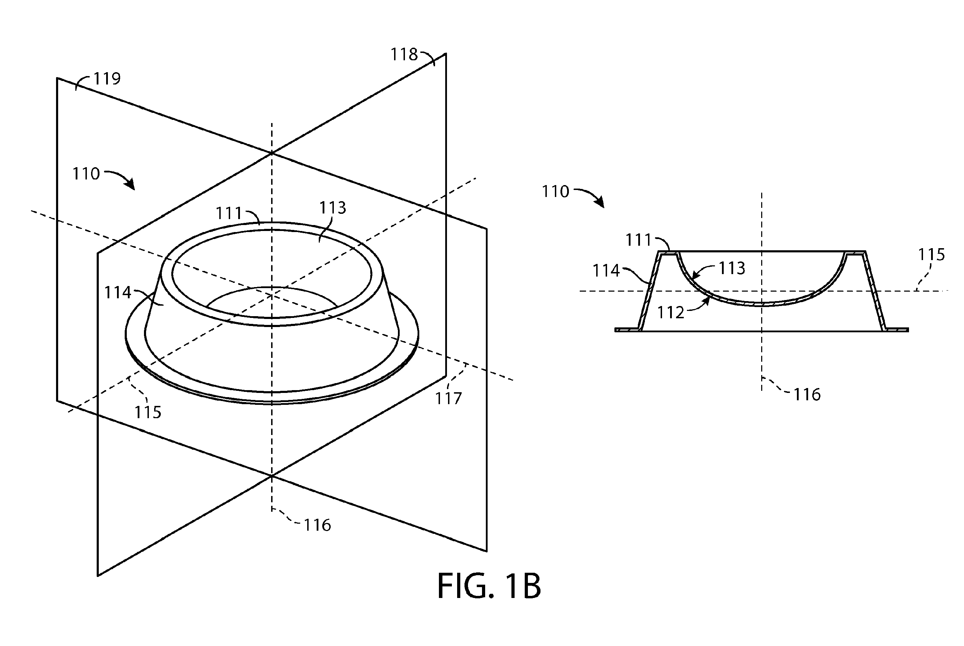

In some circumstances, a housing may comprise more than one side portion. For example, the housing may comprise a side portion that is outward from another side portion. In circumstances such as these, at least one side portion may fail to comprise an inner surface. The example of FIG. 1B illustrates a perspective and a front cross section view of housing 110. It can be seen in the example of FIG. 1B that housing 110 comprises a bowl configuration. It can be seen in the example of FIG. 1B that housing 110 comprises top portion 111, side portion 112, and inner surface 113, and side portion 114. It should be understood that in the example of FIG. 1B side portion 112 is also a bottom portion. It can be seen in the example of FIG. 1B that side portion 114 fails to comprise inner surface 113, and that side portion 114 is outward from side portion 112.

As previously described, various axes may bisect a housing. For example, FIG. 1B illustrates abscissa axis 115, ordinate axis 116, and applicate axis 117 which intersect at the approximate geometric center of housing 110. In this manner, abscissa axis 115, ordinate axis 116, and applicate axis 117 bisect housing 110. In the example of FIG. 1B., it can be seen that abscissa axis 115 is a horizontal axis that is perpendicular to ordinate axis 116 and applicate axis 117, ordinate axis 116 is a vertical axis that is perpendicular to abscissa axis 115 and applicate axis 117, and applicate axis 117 is a horizontal axis that is perpendicular to abscissa axis 115 and ordinate axis 116.

In the example of FIG. 1B, it can be seen that abscissa axis 115 horizontally bisects side portion 112 of housing 110 such that abscissa axis 115 lies on plane 118. It can be seen that in the example of FIG. 1B, plane 118 demarcates a frontward part of side portion 112 from a rearward part of side portion 112. In the example of FIG. 1B, it can be seen that applicate axis 117 horizontally bisects side portion 112 of housing 100 such that applicate axis 117 lies on plane 119. It can be seen that in the example of FIG. 1B, plane 119 demarcates a leftward part of side portion 112 from a rightward part of side portion 112.

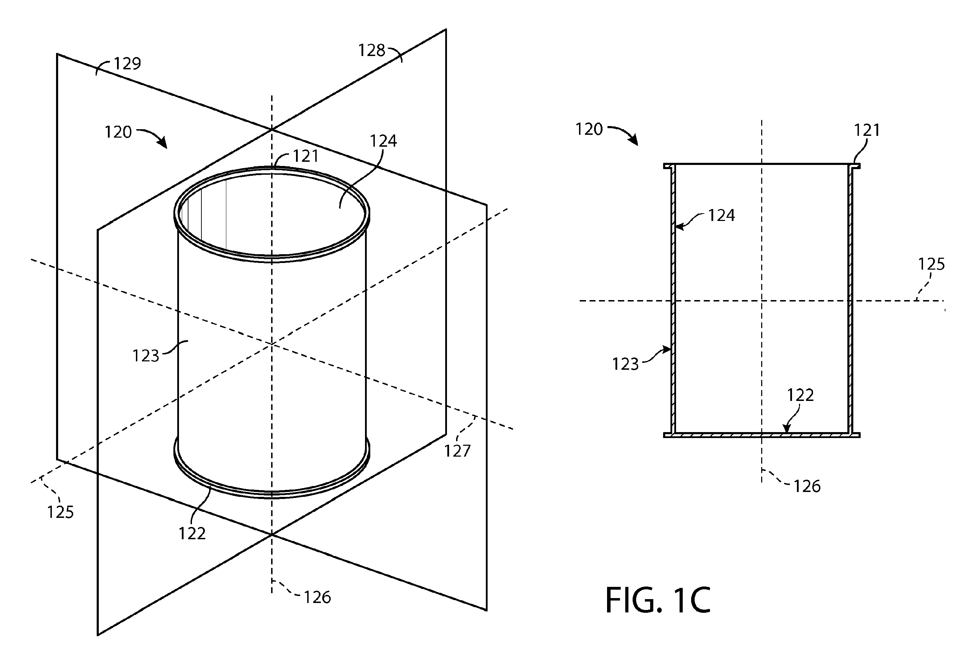

In some circumstances, a side portion of a housing may fail to have a taper. For example, the housing may comprise a cylindrical configuration. A cylindrical configuration of a housing may refer to a housing comprising a top portion, a bottom portion, a side portion extending upward to the top portion and downward toward the bottom portion such that the side portion lacks a taper, and an inner surface comprised by the side portion. The example of FIG. 1C illustrates a perspective and a front cross section view of housing 120. It can be seen in the example of FIG. 1C that housing 120 comprises a cylindrical configuration. It can be seen in the example of FIG. 1C that housing 120 comprises top portion 121, bottom portion 122, side portion 123, and inner surface 124.

As previously described, various axes may bisect a housing. For example, FIG. 1C illustrates abscissa axis 125, ordinate axis 126, and applicate axis 127 which intersect at the approximate geometric center of housing 120. In this manner, abscissa axis 125, ordinate axis 126, and applicate axis 127 bisect housing 120. In the example of FIG. 1C., it can be seen that abscissa axis 125 is a horizontal axis that is perpendicular to ordinate axis 126 and applicate axis 127, ordinate axis 126 is a vertical axis that is perpendicular to abscissa axis 125 and applicate axis 127, and applicate axis 127 is a horizontal axis that is perpendicular to abscissa axis 125 and ordinate axis 126.

In the example of FIG. 1C, it can be seen that abscissa axis 125 horizontally bisects side portion 123 of housing 120 such that abscissa axis 125 lies on plane 128. It can be seen that in the example of FIG. 1C, plane 128 demarcates a frontward part of side portion 123 from a rearward part of side portion 123. In the example of FIG. 1C, it can be seen that applicate axis 127 horizontally bisects side portion 123 of housing 120 such that applicate axis 127 lies on plane 129. It can be seen that in the example of FIG. 1C, plane 129 demarcates a leftward part of side portion 123 from a rightward part of side portion 123.

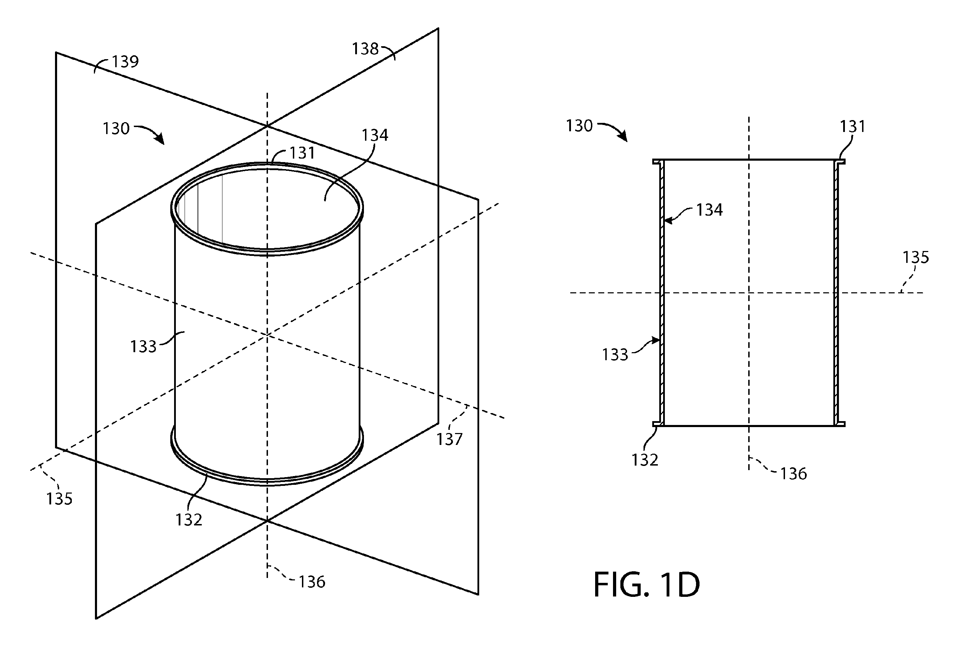

In some circumstances, a housing may have an open bottom portion. The example of FIG. 1D illustrates a perspective and a front cross section view of housing 130. It can be seen in the example of FIG. 1D that housing 130 comprises a cylindrical configuration with an open bottom portion. It can be seen in the example of FIG. 1D that housing 130 comprises top portion 131, bottom portion 132, side portion 133, and inner surface 134.

As previously described, various axes may bisect a housing. For example, FIG. 1D illustrates abscissa axis 135, ordinate axis 136, and applicate axis 137 which intersect at the approximate geometric center of housing 130. In this manner, abscissa axis 135, ordinate axis 136, and applicate axis 137 bisect housing 130. In the example of FIG. 1D., it can be seen that abscissa axis 135 is a horizontal axis that is perpendicular to ordinate axis 136 and applicate axis 137, ordinate axis 136 is a vertical axis that is perpendicular to abscissa axis 135 and applicate axis 137, and applicate axis 137 is a horizontal axis that is perpendicular to abscissa axis 135 and ordinate axis 136.

In the example of FIG. 1D, it can be seen that abscissa axis 135 horizontally bisects side portion 133 of housing 130 such that abscissa axis 135 lies on plane 138. It can be seen that in the example of FIG. 1D, plane 138 demarcates a frontward part of side portion 133 from a rearward part of side portion 133. In the example of FIG. 1D, it can be seen that applicate axis 137 horizontally bisects side portion 133 of housing 130 such that applicate axis 137 lies on plane 139. It can be seen that in the example of FIG. 1D, plane 139 demarcates a leftward part of side portion 133 from a rightward part of side portion 133.

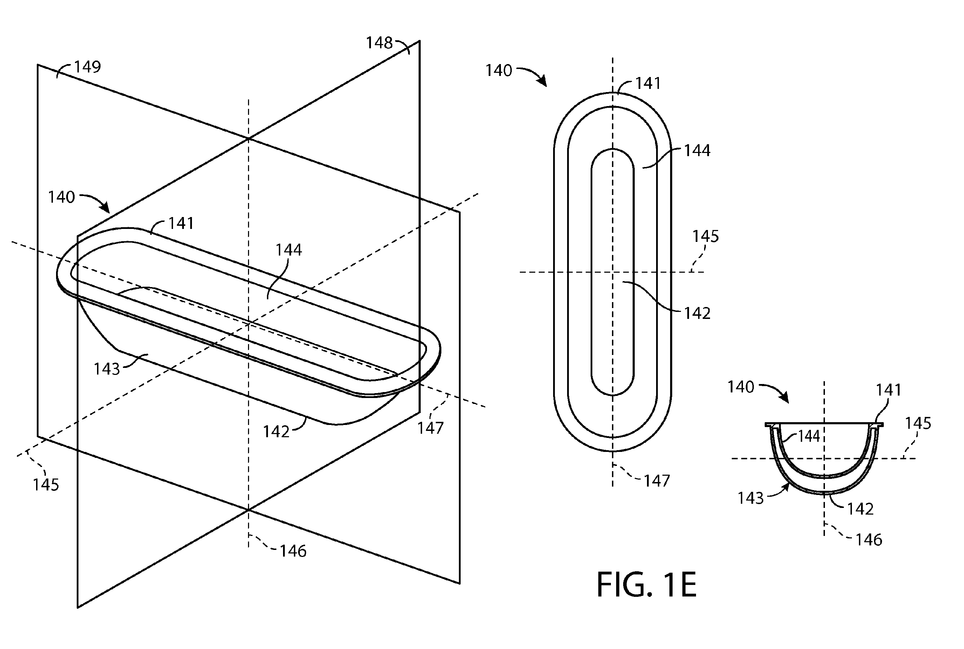

In some circumstances, a housing may have a portion with an irregular shape, an irregular contour, an irregular taper, and/or the like. For example, the top portion of a housing may have an elliptical shape, a polygonal shape, and/or the like. The example of FIG. 1E illustrates a perspective, a top down, and a front cross section view of housing 140. It can be seen in the example of FIG. 1E that housing 140 comprises a bowl configuration with an elliptical- and/or oblong-shaped top portion. It can be seen in the example of FIG. 1E that housing 140 comprises top portion 141, bottom portion 142, side portion 143, and inner surface 144.

As previously described, various axes may bisect a housing. For example, FIG. 1E illustrates abscissa axis 145, ordinate axis 146, and applicate axis 147 which intersect at the approximate geometric center of housing 140. In this manner, abscissa axis 145, ordinate axis 146, and applicate axis 147 bisect housing 140. In the example of FIG. 1E., it can be seen that abscissa axis 145 is a horizontal axis that is perpendicular to ordinate axis 146 and applicate axis 147, ordinate axis 146 is a vertical axis that is perpendicular to abscissa axis 145 and applicate axis 147, and applicate axis 147 is a horizontal axis that is perpendicular to abscissa axis 145 and ordinate axis 146.

In the example of FIG. 1E, it can be seen that abscissa axis 145 horizontally bisects side portion 143 of housing 140 such that abscissa axis 145 lies on plane 148. It can be seen that in the example of FIG. 1E, plane 148 demarcates a frontward part of side portion 143 from a rearward part of side portion 143. In the example of FIG. 1E, it can be seen that applicate axis 147 horizontally bisects side portion 143 of housing 140 such that applicate axis 147 lies on plane 149. It can be seen that in the example of FIG. 1E, plane 149 demarcates a leftward part of side portion 143 from a rightward part of side portion 143.

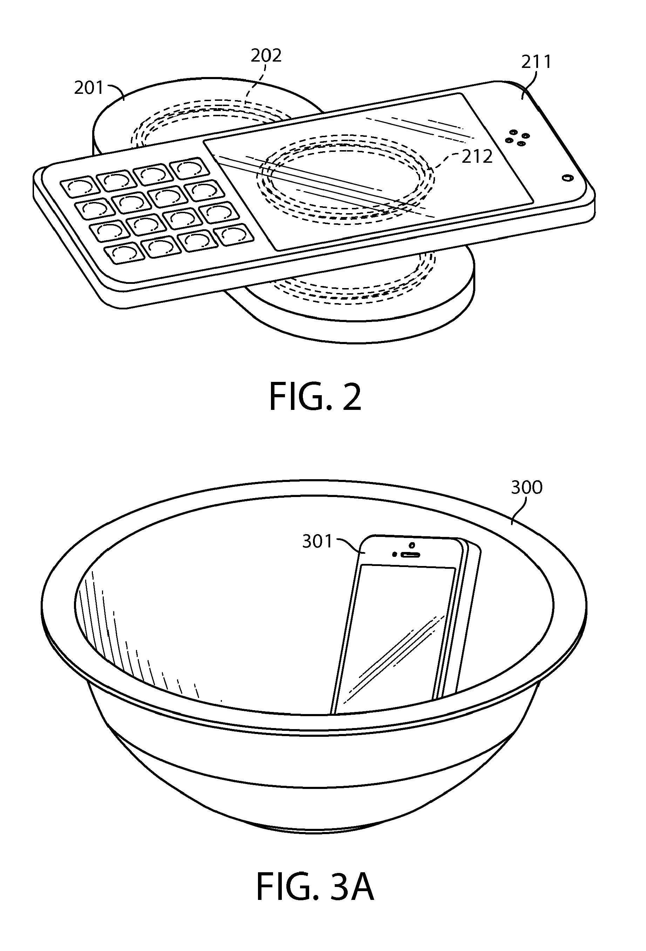

FIG. 2 is a diagram illustrating a wireless charging apparatus according to at least one example embodiment. The example of FIG. 2 is merely an example and does not limit the scope of the claims. For example, the configuration of the wireless charging apparatus may vary, the apparatus being charged may vary, the operation of the wireless charging apparatus may vary, and/or the like.

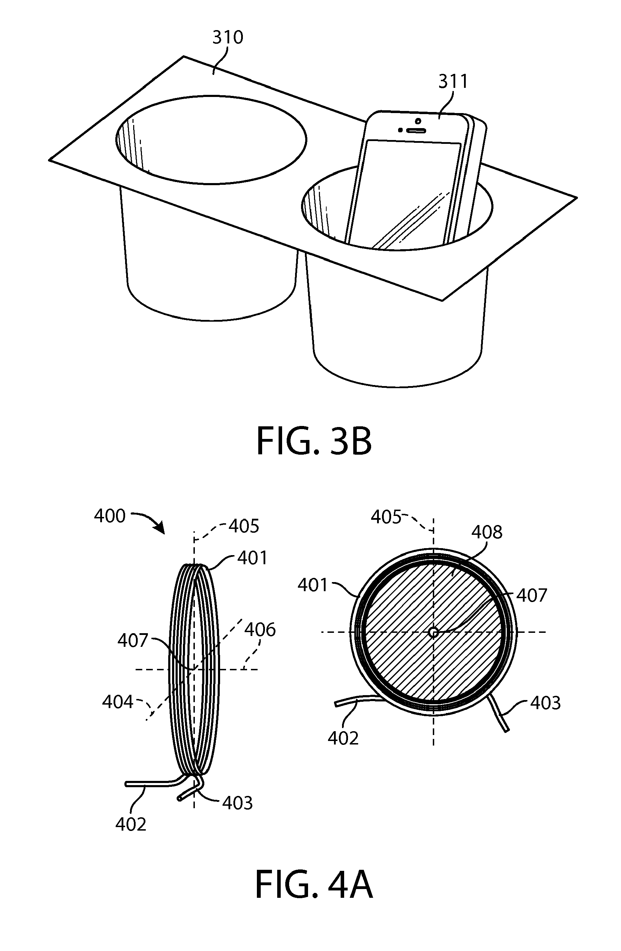

An electromagnetic field may be used to transfer energy from a first apparatus to a second apparatus by way of aligning the electromagnetic field with a receiver, such as a coil, comprised by the second apparatus. Such a transfer of energy by way of an electromagnetic field, a magnetic field, etc. may be referred to as inductive charging, wireless charging, and/or the like. For example, a first apparatus, such as a wireless charging apparatus, may be able to transmit energy to a second apparatus, such as a mobile telephone, a tablet, any device configured to be charged wirelessly, and/or the like, when the first apparatus and the second apparatus each comprise a coil, for example a coil similar as described regarding FIGS. 4A-4C, and the first and the second apparatuses are placed within proximity with each other. In this manner, an electromagnetic field generated when a coil in the first apparatus is excited may transfer energy by way of generating an electromagnetic signal, a magnetic signal, etc. which may be received by the coil of the second apparatus. A coil may be excited by energizing the coil with electricity such that the coil emanates a magnetic field. For example, a wireless charging apparatus may charge another apparatus by way of the Qi interface developed by the Wireless Power Consortium, the PMA interface developed by the Power Matters Alliance, and/or any other charging protocol.

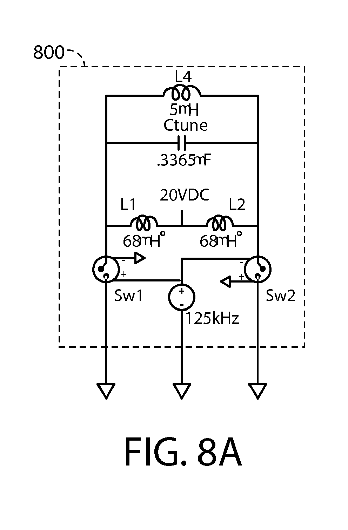

In some circumstances, it may be desirable to configure a wireless charging apparatus such that resonant coupling may be achieved between the wireless charging apparatus and a device being charged by the wireless charging apparatus. Resonant coupling may refer to the near field transmission of electrical energy between two resonant circuits tuned to resonate at the same frequency. Resonant coupling may occur when a pair of coils are configured to resonate in separate resonant circuits at the same frequency. Resonant coupling may allow power coupling between two coils despite weak mutual coupling between the coils. This may allow adequate energy transfer at a greater distance between a coil comprised by the wireless charging apparatus and a coil comprised by a device being charged, less optimal alignment of the flux compared to a traditional inductive coupling arrangement, and/or the like. Such resonant coupling may be achieved by exciting a coil of a wireless charging apparatus by way of a driver circuit similar as described regarding FIGS 8A-8C.

The example of FIG. 2 illustrates first apparatus 201 comprising coil 202. Coil 202 is internal to the housing of apparatus 201, and is similar as described regarding FIGS. 4A-4C. The example of FIG. 2 further illustrates second apparatus 211 comprising coil 212. Coil 212 is internal to the housing of apparatus 211 and is similar as described regarding FIGS. 4A-4C. It can be seen that in the example of FIG. 2, first apparatus 201 is within proximity of second apparatus 212. In this manner, coil 202 and coil 212 may be inductively coupled such that an electrical field generated by coil 202 when coil 202 is excited may transfer energy to coil 212. Even though apparatus 201 is illustrated as a wireless charging apparatus and apparatus 211 is illustrated as a mobile telephone, it should be understood that apparatus 201 and apparatus 211 may be any type of apparatus.

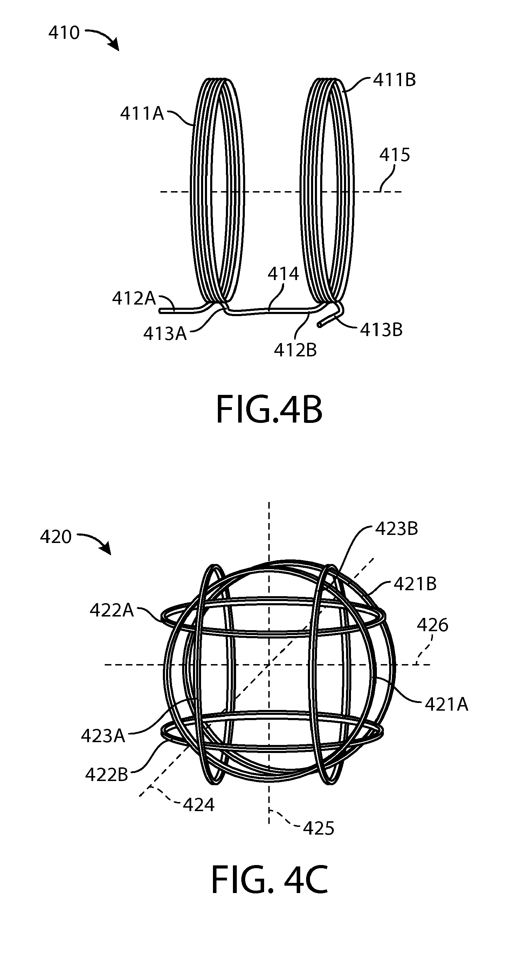

A wireless charging apparatus such as first apparatus 201 of FIG. 2 may efficiently transfer power to another apparatus when certain parameters are maintained. For example, first apparatus 201 may efficiently transfer power to second apparatus 211 when coils 202 and 212 are of identical size and shape, when coils 202 and 212 are perfectly aligned, and when coils 202 and 212 have a minimum distance between them. Coils 202 and 212 may be considered perfectly aligned when coils 202 are symmetrically aligned along an axis extending through the electrically conductive coil center points, similar as described regarding electrically conductive coils 411A and 411B of FIG. 4B.

In some circumstances, a wireless charging apparatus may be unable to achieve perfect alignment with a coil in another device, the coil in the other device may be of a different size and/or shape, and/or the like. For example, a wireless charging apparatus may be used to charge various devices of different sizes and shapes, a user of the wireless charger may neglect to carefully align the charger with the apparatus being charged, and/or the like. In circumstances such as these, it may be desirable to configure a wireless charging apparatus to efficiently transfer power to another apparatus without respect to the size, shape, or orientation of a coil comprised by the other apparatus. Furthermore, it may be prohibitively difficult for a person to orient an apparatus with a charging apparatus in a manner that achieves perfect alignment. For example, such a person may have difficulty orienting the apparatus so that the coils of the apparatus and the charging apparatus are at similar angles to each other.

It can be seen in the example of FIG 2 that first apparatus 201 comprises a housing that provides alignment between coil 202 and coil 212 of second apparatus 211 when second apparatus is resting on the upper surface of the housing of first apparatus 201. Although such a housing allows an apparatus to rest upon the housing when charging is being performed, it may be desirable to provide a housing that is easier for a user to utilize. For example, a user may desire to avoid focusing his attention towards resting an apparatus on a top surface of a charging apparatus, may desire a housing that avoids allowing the apparatus to slip off of the charging apparatus, etc. For example, a user may desire the housing of the charging apparatus to hold the apparatus so that lateral forces do not necessarily cause the apparatus to slip from the top surface of the charging apparatus. In another example, the user may desire to simply drop the apparatus onto or into the charging apparatus without taking time to ensure that the apparatus is oriented in a manner that will allow the apparatus to rest upon the top surface of the housing of the charging apparatus.

In some circumstances, it may be desirable for a charging apparatus to have a housing that allows multiple apparatuses to be charged without requiring the user to arrange the apparatuses in any particular orientation. For example, a user may desire to simply place a plurality of apparatuses onto or into a charging apparatus without necessarily forcing the orientation of the apparatuses to align with the charging apparatus in any particular way.

FIGS. 3A-3B are diagrams illustrating containers according to at least one example embodiment. The examples of FIGS. 3A-3B are merely examples and do not limit the scope of the claims. For example, the size of the container may vary, the shape of the container may vary, the configuration of the container may vary, and/or the like.

As previously described, an apparatus may comprise a housing. For example, an apparatus may comprise a housing similar as described regarding FIGS. 1A-1E. In some circumstances, an apparatus may be configured to hold an object, store an object, secure an object, contain an object, and/or the like. For instance, the apparatus may be a bowl apparatus, a cup-holder apparatus, a tray apparatus, and/or the like. A cup-holder apparatus may refer to an apparatus configured to secure, contain, store, hold, and/or the like a beverage container such as a can, a cup, a mug, a bottle, and/or the like. Even though a cup-holder apparatus may be configured to secure, contain, store, hold, and/or the like a beverage container such as a can, a cup, a mug, a bottle, and/or the like, a cup-holder apparatus may be utilized to secure, contain, hold, store, and/or the like other objects. For example, cup-holder apparatuses integrated within automobile interiors are often used to secure, contain, store, hold, and/or the like electronic apparatuses such as mobile telephones, spare change, rubbish, and/or the like. A tray apparatus may refer to an apparatus configured to secure, contain, hold, and/or the like an object in a horizontal position. For example, a tray apparatus may be used to store a mobile device laying on its back, a book lying flat, and/or the like. In circumstances such as these, it may be desirable for a housing comprised by the apparatus to comprise a container. In this manner, the housing may serve as the portion of the apparatus used to hold an object, store an object, secure an object, contain an object, and/or the like. In at least one example embodiment, a side portion of a housing is configured to at least partially prevent objects from permeating sideways through the housing. In this manner, the housing may comprise a container such that the side portion is a side portion of the container. In at least one example embodiment, the container at least partially surrounds a contained space by way of the side portion. A contained space may refer to a space at least partially enclosed by a container. In at least one example embodiment, an inner surface faces the contained space. In at least one example embodiment, the inner surface is a surface that is external to the housing and faces the contained space.

As previously described, a housing may be configured to hold an object, store an object, secure an object, contain an object, and/or the like. The example of FIG. 3A illustrates apparatus 301 being contained within a contained space of housing 300 of a bowl apparatus. It can be seen that apparatus 301 fails to permeate sideways through housing 300. In this manner housing 300 may be a container such that housing 300 may hole, store, secure, contain, and/or the like apparatus 301. Even though apparatus 301 is illustrated as a mobile telephone, apparatus 301 may be any object. Even though apparatus 301 is illustrated has having been placed in housing 300 with a particular orientation, apparatus 301 may be placed in housing 300 in other orientations.

As previously described, a housing may be configured to hold an object, store an object, secure an object, contain an object, and/or the like. The example of FIG. 3B illustrates apparatus 311 being contained within a contained space of housing 310 of a cup-holder apparatus. It can be seen that apparatus 311 fails to permeate sideways through housing 310. In this manner housing 310 may be a container such that housing 310 may hole, store, secure, contain, and/or the like apparatus 311. Even though apparatus 311 is illustrated as a mobile telephone, apparatus 311 may be any object. Even though apparatus 311 is illustrated has having been placed in housing 310 with a particular orientation, apparatus 311 may be placed in housing 310 in other orientations.

In some circumstances, it may be desirable for a charging apparatus to have a housing that is configured to contain at least part of an apparatus. For example, such a configuration may be capable of allowing the user to avoid situation where the apparatus slips off of the charging apparatus. However, it may be desirable to provide a more robust coil arrangement for such a charging apparatus that allows for efficient charging for various possible apparatus orientation within the container. For example, it can be seen in FIG. 3B that apparatus has a particular orientation with respect to container 310. It may be desirable for a charger apparatus having a housing similar to container 310 to be configured to charge apparatus 311 at the orientation illustrated in the example of FIG. 3B, as well as other orientations.

In some circumstances, it may be desirable for a housing to comprise a lid. For example, a lid may be used to cover an open portion of a container comprised by the housing. A lid may refer to any cover, top, door, and/or the like that may be used to at least partially cover an open portion of a housing. In this manner, items placed in the housing may be more secure, may be better contained, and/or the like. In at least one example embodiment, a housing comprises a lid that at least partially covers the container at the top portion of the housing. In such an example embodiment, the housing may be at least partially open when lid is removed or when lid is opened. In at least one example embodiment, the housing fails to comprise a lid that at least partially covers the container at the top portion of the housing.

FIGS. 4A-4C are diagrams illustrating electrically conductive coils according to at least one example embodiment. The examples of FIGS. 4A-4C are merely examples and do not limit the scope of the claims. For example, the size of the coils may vary, the shape of the coils may vary, the configuration of the coils may vary, and/or the like.

As previously described, in some circumstances an apparatus may comprise a coil. For example, a wireless charging apparatus may comprise an electrically conductive coil to transfer energy to a different electrically conductive coil in another apparatus. An electrically conductive coil may refer to an electrical conductor comprising a coil shape, a spiral shape, a helical shape, and/or the like.

The example of FIG. 4A illustrates a perspective and a front elevation view of electrically conductive coil 400. Electrically conductive coil 400 comprises winding 401, first terminal 402, and second terminal 403. It should be understood that winding 401 comprises multiple overlapping turns of a continuous length of an insulated electrically conductive material, such as enamel coated copper wire, polymer coated aluminum wire, and/or the like. The conductive material of winding 401 begins at first terminal 402 and ends at second terminal 403. It can be seen that in the example of FIG. 4A, winding 401 has a circular helical shape. Even though winding 401 is illustrated as having a circularly helical shape, it should be understood that a winding may have a non-helical shape, an irregular shape, and/or the like. For example, a winding may have an ellipsoid shape, a polygonal shape, a cardioid shape, and/or the like.

Various axes may bisect a coil. For example, FIG. 4A illustrates abscissa axis 404, ordinate axis 405, and applicate axis 406 which intersect at the approximate geometric center 407 of coil 400. In this manner, abscissa axis 404, ordinate axis 405, and applicate axis 406 bisect coil 400, and geometric center 407 is an electrically conductive coil center point of electrically conductive coil 400. An electrically conductive coil center point may refer to the geometric center of a space encircled by the electrically conductive coil. For example, it can be seen that geometric center 407 is the geometric center of space 408, illustrated by the hatched region surrounded by winding 401 in the front elevation view of FIG. 4A. The space encircled by an electrically conductive coil may be referred to as a core area and/or a magnetic axis. For example, space 408 may be referred to as the core area and/or the magnetic axis of coil 400.

In some circumstances, an electrically conductive coil may be electrically coupled to a different electrically conductive coil. Such a coupling of electrically conductive coils may be referred to as an electrically conductive coil pair. An electrically conductive coil pair may have a variety of configurations. For example, an identical pair of electrically coupled circularly helical wound coils placed symmetrically along a common axis may be referred to as a Helmholtz coil. A coil pair configuration such as a Helmholtz coil may allow for production of a regions of nearly uniform magnetic field between the coil pair. In some circumstances, an object placed within a magnetic field between a coil pair may receive flux at a higher strength and/or more direct angle than when the object is placed outside the magnetic field between the coil pair. In some circumstances, an object placed within a magnetic field between a coil pair may receive a nearly uniform magnetic field. For example, a coil may receive more magnetic flux from a uniform magnetic field than from a non-uniform magnetic field when the coil is aligned properly with the uniform magnetic field. A coil may also receive more flux from multiple coils energized in tandem in circumstances where the multiple coils' magnetic fields add constructively. In circumstances such as these, it may be desirable to configure a wireless charging apparatus such that the wireless charging apparatus comprises an electrically conductive coil pair. For example, a device being charged may be placed such that at least part of the devices is between the coil pair. In this manner, the coil pair may direct more energy into the device than a single coil may direct into the device.

The example of FIG. 4B illustrates a perspective view of electrically conductive coil pair 410. Electrically conductive coil pair 410 comprises first electrically conductive coil 411a and second electrically conductive coil 411b. It can be seen that in the example of FIG. 4B, electrically conductive coil 411A comprises a circularly helical winding, first terminal 412A and second terminal 413A, and that electrically conductive coil 411B comprises a circularly helical winding, first terminal 412B and second terminal 413B. It can be seen that in the example of FIG. 4B, electrically conductive coil 411A is identical to electrically conductive coil 411B, electrically conductive coil 411A is directly electrically coupled to electrically conductive coil 411B by way of conductor 414, and that electrically conductive coil 411A is symmetrically aligned to electrically conductive coil 411B along axis 415 such that axis 415 extends through the electrically conductive coil center points of electrically conductive coil 411A and electrically conductive coil 411B. In this manner, it should be understood that the example of FIG. 4B is an example of a Helmholtz coil. Even though electrically conductive coils 411A and 411B, and conductor 414 are described as discrete components and/or comprising discrete components, it should be understood that a coil pair may comprise a single continuous electrical conductor shaped into a coil pair.

As previously described, a Helmholtz coil may allow for a region of nearly uniform magnetic field between the coil pair. In some circumstances, multiple Helmholtz coils may be configured to produce regions of substantially uniform magnetic field in multiple directions. For example, a particular configuration of three Helmholtz coils positioned on perpendicular axes may be referred to as a multi-axis Helmholtz coil. A multi-axis Helmholtz coil may be used to produce regions of substantially uniform magnetic field in three perpendicular directions at different times. For example, a first region of substantially uniform magnetic field may be produced in a first direction by energizing the first Helmholtz coil in a multi-axis Helmholtz coil when the second and third Helmholtz coils are not energized. A second region of substantially uniform magnetic field may be produced in a second direction by energizing the second Helmholtz coil in a multi-axis Helmholtz coil when the first and third Helmholtz coils are not energized. A third region of substantially uniform magnetic field may be produced in a third direction by energizing the third Helmholtz coil in a multi-axis Helmholtz coil when the first and second Helmholtz coils are not energized.

In some circumstances, it may be desirable to configure a wireless charging apparatus such that the wireless charging apparatus comprises multiple electrically conductive coil pairs. For example, a device being charged may be placed such that at least part of the devices is between the each of the coil pairs. In this manner, the coil pairs may direct more energy into the device than a single coil and/or coil pair may direct into the device, and the efficiency of the wireless charging apparatus may be less dependent on the orientation of the device than a wireless charging apparatus comprising a single electrically conductive coil pair.

The example of FIG. 4C illustrates a perspective view of a multi-axis Helmholtz coil 420. Multi-axis Helmholtz coil 420 comprises a first electrically conductive coil pair comprising first electrically conductive coil 421A and second electrically conductive coil 421B, a second electrically conductive coil pair comprising third electrically conductive coil 422A and fourth electrically conductive coil 422B, and a third electrically conductive coil pair comprising fifth electrically conductive coil 423A and sixth electrically conductive coil 423B. It can be seen that in the example of FIG. 4C, the first electrically conductive coil pair is aligned along axis 424, the second electrically conductive coil pair is aligned along axis 425, and the third electrically conductive coil pair is aligned along axis 426. It can be seen that in the example of FIG. 4C, axes 424, 425, and 426 are perpendicular with each other. It should be understood that the electrically conductive coil pairs of a multi-axis Helmholtz coil 420 are similar as described regarding the Helmholtz coil illustrated as electrically conductive coil pair 410 of FIG. 4B.

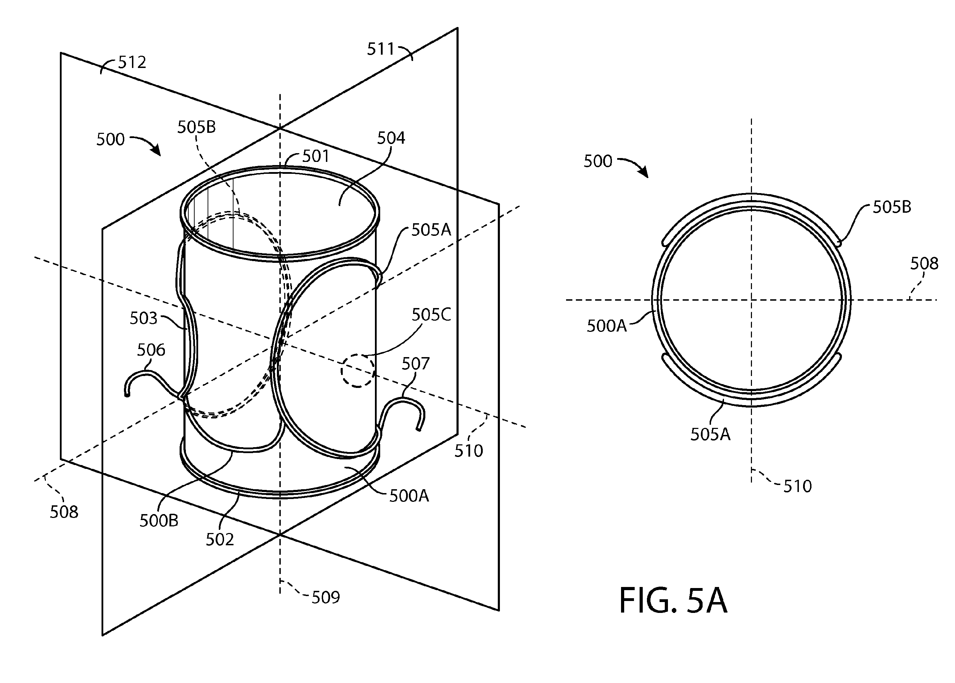

FIGS. 5A-5F are diagrams illustrating electrically conductive coil pairs configured to be coupled to a housing according to at least one example embodiment. The examples of FIGS. 5A-5F are merely examples and do not limit the scope of the claims. For example, the number of electrically conductive coil pairs may vary, the configuration of the electrically conductive coil pairs may vary, the shape of the electrically conductive coil pairs may vary, and/or the like.

As previously described, a housing comprised by an apparatus may be configured as a container, may be configured to contain at least part of an object, may be a container, and/or the like. For example, as previously described, a container comprised by the housing may be configured to hold an object, store an object, secure an object, contain an object, and/or the like. For example, the container may be used to store an electronic device. In circumstances where a container is configured to store an electronic device, a user of the electronic device may wish for a power source for the electronic device, such as an electrical battery, to be recharged. In circumstances such as these, it may be desirable for a housing comprising a container to provide charging energy to the electronic device. For example, an electrically conductive coil, a coil pair, and/or the like similar as described regarding FIGS. 4A-4C may be coupled to a side portion that is opposite an inner surface of the housing. Coupling may refer to an attachment to the housing by way of glue, pegs, protrusions of the housing, cable ties, mechanical attachment points, friction fitting, snaps, integral thermoforming, integral forming, mechanical coupling, and/or the like. Such a coil pair may be part of a wireless charging circuit that may be used to charge an electronic apparatus when the electronic apparatus is placed in the container comprised by the housing.

In some circumstances, an electrically conductive coil, coil pair, and/or the like may be coupled to a housing between a side portion and another side portion. For example, an electrically conductive coil may be coupled to side portion 112 of housing 110 of FIG. 1B such that the coil is between side portion 112 and other side portion 114.

As previously described, a wireless charging apparatus may comprise one or more Helmholtz coils to charge a device in an efficient manner without regard to the orientation of the device being charged. However, it may be desirable to avoid one or more mechanical limitations associated with such a configuration of Helmholtz coils. For example, a housing configured to be coupled to one or more Helmholtz coils may have an undesirable shape and/or an overly large size, it may be difficult to insert a device between one or more Helmholtz coils, a desired housing shape, for example, a housing similar to housings 301 and 311 of FIGS. 3A-3B may not accommodate the size and/or shape of a Helmholtz coil, and/or the like. In circumstances where an electrically conductive coil is coupled to a housing, it may be desirable for the electrically conductive coil to be shaped to substantially conform to an inner surface of the housing such that each consecutive winding of the electrically conductive coil conforms to a contour of the inner surface that is opposite to a part of the housing to which the electrically conductive coil is coupled. Substantially conforming to a surface may refer to shape that conforms to a surface within a threshold deviational tolerance, and manufacturing tolerance, and/or the like. For instance, a manufacturing tolerance may allow for a shape to deviate from the shape of a surface by a particular amount, such as 10 micrometers, 0.5 millimeters, and/or the like. For example, shaping the electrically conductive coil to substantially conform to the inner surface may allow for a more compact wireless charging apparatus, may allow for better alignment between a device and the electrically conductive coil, may allow for a better energy transfer between the device and the electrically conductive coil, and/or the like. In at least one example embodiment, an electrically conductive coil is shaped to substantially conform to the inner surface of a housing such that each consecutive winding of the electrically conductive coil conforms to a contour of the inner surface that is opposite to a part of the side portion of the housing to which the electrically conductive coil is coupled. It should be understood that in such a configuration, magnetic vectors between the device and the electrically conductive coil may not have perfect alignment. In at least one example embodiment, the electrically conductive coil is helically wound outward from the inner surface.

The technical effect of shaping an electrically conductive coil pair to conform to an inner surface of a housing is such that the magnetic field between the coil pair is less uniform than the magnetic field between the coils of a Helmholtz coil. Such technical effect should not be construed as limiting the scope of the claims. As previously described, shaping the electrically conductive coil to conform to the inner surface may allow for a more compact wireless charging apparatus, may allow for a better energy transfer between the device and the electrically conductive coil, and/or the like. Such properties may be desired over a more uniform magnetic field. In this manner, a user may quickly place an electronic device in the wireless charging apparatus without consideration for an orientation of the electronic device, a location of the electronic device in the wireless charging apparatus, and/or the like.

The example of FIG. 5A illustrates a perspective and a top down view of apparatus 500. Apparatus 500 comprises a housing 500A and an electrically conductive coil pair 500B. It should be understood that, in the example of FIG. 5A, electrically conductive coil pair 500B is similar as described regarding FIGS. 4A-4C. It can be seen in the example of FIG. 5A that housing 500A comprises a cylindrical configuration. It can be seen in the example of FIG. 5A that housing 500A comprises top portion 501, bottom portion 502, side portion 503, and inner surface 504. It can be seen in the example of FIG. 5A that electrically conductive coil pair 500B comprises first electrically conductive coil 505A, second electrically conductive coil 505B, first terminal 506, and second terminal 507. It can be seen in the example of FIG. 5A that electrically conductive coil pair 500B is coupled to housing 500A outside of inner surface 504, and that electrically conductive coils 505A and 505B are shaped to substantially conform to inner surface 504.

As previously described, various axes may bisect a housing. For example, FIG. 5A illustrates abscissa axis 508, ordinate axis 509, and applicate axis 510 which intersect at the approximate geometric center of housing 500A. In this manner, abscissa axis 508, ordinate axis 509, and applicate axis 510 bisect housing 500A. In the example of FIG. 5A., it can be seen that abscissa axis 508 is a horizontal axis that is perpendicular to ordinate axis 509 and applicate axis 510, ordinate axis 509 is a vertical axis that is perpendicular to abscissa axis 508 and applicate axis 510, and applicate axis 510 is a horizontal axis that is perpendicular to abscissa axis 508 and ordinate axis 509.

In the example of FIG. 5A, it can be seen that abscissa axis 508 horizontally bisects side portion 503 of housing 500A such that abscissa axis 508 lies on plane 511. It can be seen that in the example of FIG. 5A, plane 511 demarcates a frontward part of side portion 503 from a rearward part of side portion 503. In the example of FIG. 5A, it can be seen that applicate axis 510 horizontally bisects side portion 503 of housing 500A such that applicate axis 510 lies on plane 512. It can be seen that in the example of FIG. 5A, plane 512 demarcates a leftward part of side portion 503 from a rightward part of side portion 503.

In the example of FIG. 5A, it can be seen that applicate axis 510 extends through an electrically conductive coil center point of electrically conductive coils 505A and 505B. For example, it can be seen that applicate axis 510 extends through region 505C which is a region comprising the approximate electrically conductive coil center point of electrically conductive coil 505A. In this manner, electrically conductive coil 505A is shaped to substantially conform with inner surface 504 around a first electrically conductive coil center point, and electrically conductive coils 505B is shaped to substantially conform with inner surface 504 around a second electrically conductive coil center point, and that the first and second electrically conductive center points are on an axis that horizontally bisects side portion 503 of housing 500A.

In the example of FIG. 5A, at least part of an electronic apparatus may be placed into a space contained by inner surface 504. In this manner the at least part of the electronic apparatus may receive energy from electrically conductive coil pair 500B when electrically conductive coil pair 500B is excited. In some circumstances, the electronic apparatus may receive more or less energy from electrically conductive coil pair 500B, depending on the orientation of the electronic apparatus.

As previously described, when an electronic device is configured to be wirelessly charged similarly as described regarding FIG. 2, charging is most efficient when the apparatus is placed in proximity to the wireless charging apparatus at a particular distance, orientation, and/or the like. In some circumstances, an electronic apparatus may be placed near an electrically conductive coil, an electrically conductive coil pair, and/or the like in a random orientation. For example, an electronic device may be placed with a random orientation into a wireless charging apparatus comprising a container and an electrically conductive coil pair by a user desiring to charge the electronic device. In circumstances where the electronic device is placed with a random orientation, it may be desirable to configure the wireless charging apparatus such that the orientation of the electronic device has minimal impact on the efficiency of the wireless charging apparatus, the electronic device may charge regardless of an orientation and/or position of the electronic device in the wireless charging apparatus, and/or the like. In circumstances such as these, it may be desirable for the apparatus to comprise multiple coils and/or coil pairs. In this manner, it is more likely the electronic device will be placed in a position for more efficient transfer of power from at least one of the electrically conductive coils of the apparatus.

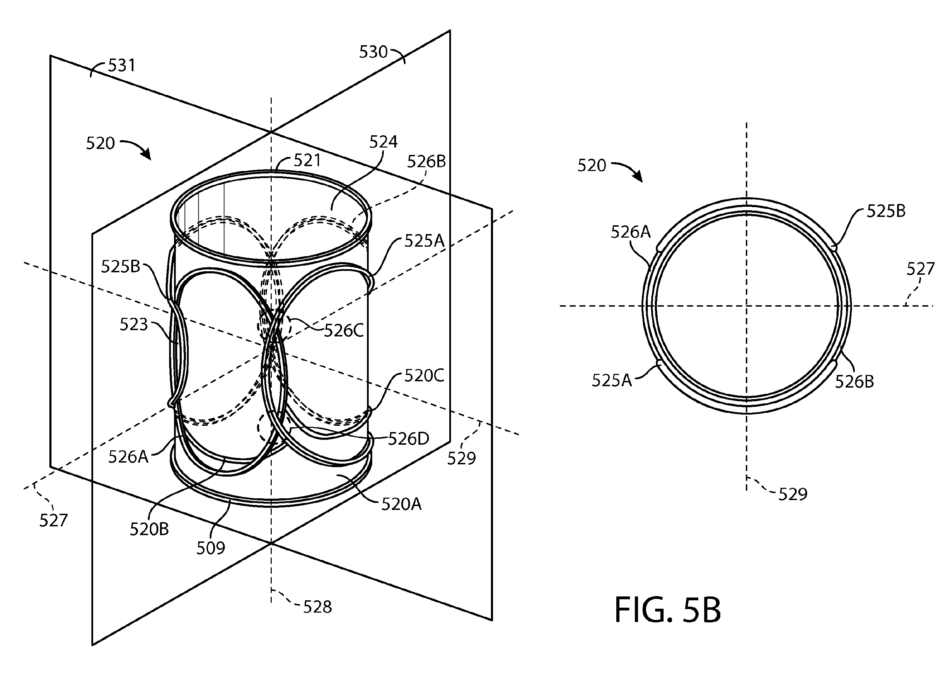

The example of FIG. 5B illustrates a perspective and a top down view of apparatus 520. Apparatus 520 comprises a housing 520A, first electrically conductive coil pair 520B, and second electrically conductive coil pair 520C. Even though it is not illustrated, it should be understood that in the example of FIG. 5B, electrically conductive coil pairs 520B and 520C may each further comprise a first and a second terminal similar to electrically conductive coil pair 500B of FIG. 5A. It should be understood that, in the example of FIG. 5B, electrically conductive coil pairs 520B and 520C are similar as described regarding FIGS. 4A-4C, FIG. 5A, and/or the like. It can be seen in the example of FIG. 5B that housing 520A comprises a cylindrical configuration. It can be seen in the example of FIG. 5B that housing 520B comprises top portion 521, bottom portion 522, side portion 523, and inner surface 524. It can be seen in the example of FIG. 5B that first electrically conductive coil pair 520B comprises first electrically conductive coil 525A and second electrically conductive coil 525B. It can be seen in the example of FIG. 5B that second electrically conductive coil pair 520C comprises third electrically conductive coil 526A and fourth electrically conductive coil 526B. It can be seen in the example of FIG. 5B that electrically conductive coil pair 520B is coupled to housing 520A outside of inner surface 524, and that electrically conductive coils 525A and 525B are shaped to substantially conform to inner surface 524. It can be seen in the example of FIG. 5B that electrically conductive coil pair 520C is coupled to housing 520A outside of inner surface 524, and that electrically conductive coils 526A and 526B are shaped to substantially conform to inner surface 524.

As previously described, various axes may bisect a housing. For example, FIG. 5B illustrates abscissa axis 527, ordinate axis 528, and applicate axis 529 which intersect at the approximate geometric center of housing 520A. In this manner, abscissa axis 527, ordinate axis 528, and applicate axis 529 bisect housing 520A. In the example of FIG. 5B., it can be seen that abscissa axis 527 is a horizontal axis that is perpendicular to ordinate axis 528 and applicate axis 529, ordinate axis 528 is a vertical axis that is perpendicular to abscissa axis 527 and applicate axis 529, and applicate axis 529 is a horizontal axis that is perpendicular to abscissa axis 527 and ordinate axis 530.

In the example of FIG. 5B, it can be seen that abscissa axis 527 horizontally bisects side portion 523 of housing 520A such that abscissa axis 527 lies on plane 530. It can be seen that in the example of FIG. 5B, plane 530 demarcates a frontward part of side portion 523 from a rearward part of side portion 523. In the example of FIG. 5B, it can be seen that applicate axis 529 horizontally bisects side portion 523 of housing 520A such that applicate axis 520 lies on plane 531. It can be seen that in the example of FIG. 5B, plane 531 demarcates a leftward part of side portion 523 from a rightward part of side portion 523.

In the example of FIG. 5B, it can be seen that applicate axis 529 extends through an electrically conductive coil center point of electrically conductive coils 525A and 525B. In this manner, electrically conductive coil 525A is shaped to substantially conform with inner surface 524 around a first electrically conductive coil center point, electrically conductive coil 525B is shaped to substantially conform with inner surface 524 around a second electrically conductive coil center point, and that the first and second electrically conductive center points are on an axis that horizontally bisects side portion 503 of housing 520A.

In the example of FIG. 5B, it can be seen that abscissa axis 527 extends through an electrically conductive coil center point of electrically conductive coils 526A and 526B. In this manner, electrically conductive coil 526A is shaped to substantially conform with inner surface 524 around a third electrically conductive coil center point, electrically conductive coil 526B is shaped to substantially conform with inner surface 524 around a fourth electrically conductive coil center point, and that the third and fourth electrically conductive center points are on an axis that horizontally bisects side portion 523 of housing 520A.

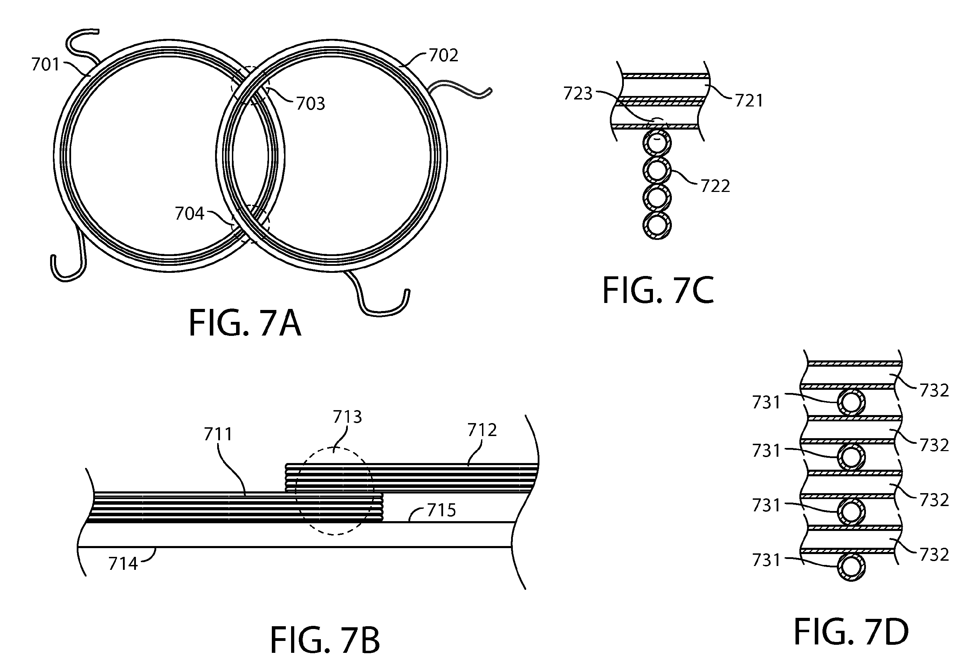

In the example of FIG. 5B, it can be seen that electrically conductive coil 526A partially overlaps electrically conductive coils 525A and 525B. For example, it can be seen that electrically conductive coil 526A partially overlaps electrically conductive coil 525A at regions 526C and 526D. In the example of FIG. 5B, it can be seen that electrically conductive coil 526B partially overlaps electrically conductive coils 525A and 525B. Configuration of electrically conductive coils such that they partially overlap in a particular manner may allow for reduced interference, cross-talk, and/or the like between partially overlapping coils while allowing the coils to be in near proximity, allowing the coils conform to the shape of the housing, and/or the like. Even though electrically conductive coils 526A and 526B are illustrated as partially overlapping electrically conductive coils 525A and 525B in a particular manner, it should be understood that electrically conductive coils may partially overlap in other manners, such as those described regarding FIGS. 7A-7D.

In the example of FIG. 5B, at least part of an electronic apparatus may be placed into a space contained by inner surface 524. In this manner the at least part of the electronic apparatus may receive energy from electrically conductive coil pairs 520B and 520C when electrically conductive coil pairs 520B and 520C are excited. In some circumstances, the electronic apparatus may receive more energy from electrically conductive coil pair 520B depending on the orientation of the electronic apparatus. In other circumstances, the electronic apparatus may receive more energy from electrically conductive coil pair 520C depending on the orientation of the electronic apparatus.

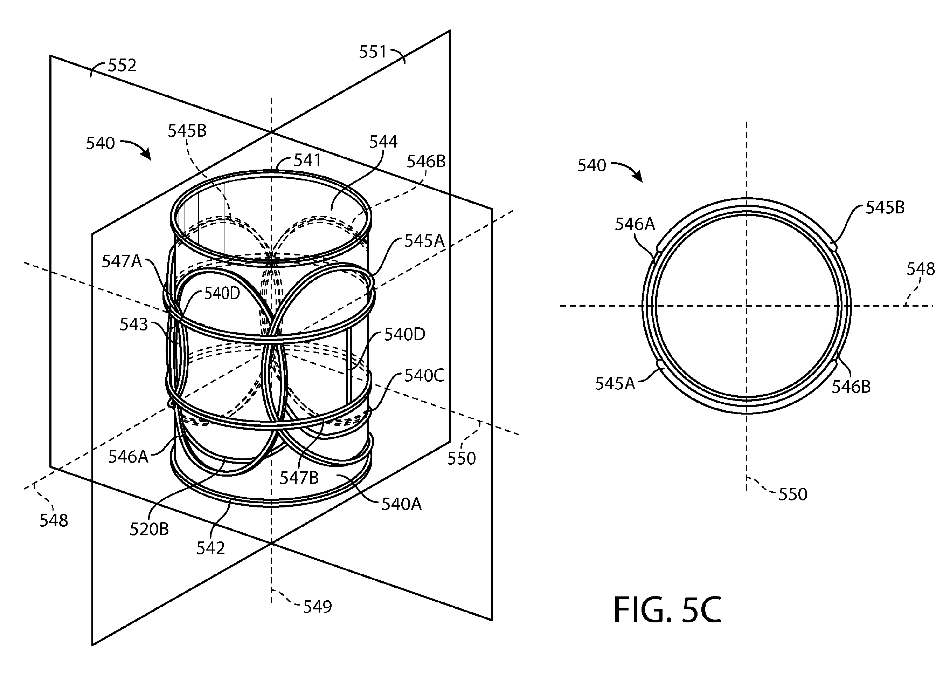

As previously described, in circumstances where an electronic device is placed with a random orientation in a wireless charging apparatus, it may be desirable to configure the wireless charging apparatus such that the orientation of the electronic device has minimal impact on the efficacy of the wireless charging apparatus, the electronic device may charge regardless of an orientation and/or position of the electronic device in the wireless charging apparatus, and/or the like. As previously described, in circumstances such as these, it may be desirable for the apparatus to comprise multiple coils and/or coil pairs. The example of FIG. 5C illustrates a perspective and a top down view of apparatus 540. Apparatus 540 comprises a housing 540A, first electrically conductive coil pair 540B, second electrically conductive coil pair 540C, and third electrically conductive coil pair 540D. Even though it is not illustrated, it should be understood that in the example of FIG. 5B, electrically conductive coil pairs 540B, 540C and 540D may each further comprise a first and a second terminal similar to electrically conductive coil pair 500B of FIG. 5A. It should be understood that, in the example of FIG. 5C, electrically conductive coil pairs 540B, 540C, and 540D are similar as described regarding FIGS. 4A-4C, FIG. 5A-5B, and/or the like. It can be seen in the example of FIG. 5C that housing 540A comprises a cylindrical configuration. It can be seen in the example of FIG. 5C that housing 540A comprises top portion 541, bottom portion 542, side portion 543, and inner surface 544.

It can be seen in the example of FIG. 5C that first electrically conductive coil pair 540B comprises first electrically conductive coil 545A and second electrically conductive coil 545B. It can be seen in the example of FIG. 5C that second electrically conductive coil pair 540C comprises third electrically conductive coil 546A and fourth electrically conductive coil 546B. It can be seen in the example of FIG. 5C that third electrically conductive coil pair 540D comprises fifth electrically conductive coil 547A and sixth electrically conductive coil 547D.

It can be seen in the example of FIG. 5C that electrically conductive coil pair 540B is coupled to housing 540A outside of inner surface 544, and that electrically conductive coils 545A and 545B are shaped to substantially conform to inner surface 544. It can be seen in the example of FIG. 5C that electrically conductive coil pair 540C is coupled to housing 540A outside of inner surface 544, and that electrically conductive coils 546A and 546B are shaped to substantially conform to inner surface 544. It can be seen in the example of FIG. 5C that electrically conductive coil pair 540D is coupled to housing 540A outside of inner surface 544, and that electrically conductive coils 547A and 547B are shaped to substantially conform to inner surface 544.

As previously described, various axes may bisect a housing. For example, FIG. 5B illustrates abscissa axis 548, ordinate axis 549, and applicate axis 550 which intersect at the approximate geometric center of housing 540A. In this manner, abscissa axis 548, ordinate axis 549, and applicate axis 550 bisect housing 540A. In the example of FIG. 5C., it can be seen that abscissa axis 548 is a horizontal axis that is perpendicular to ordinate axis 549 and applicate axis 550, ordinate axis 549 is a vertical axis that is perpendicular to abscissa axis 548 and applicate axis 550, and applicate axis 550 is a horizontal axis that is perpendicular to abscissa axis 548 and ordinate axis 549.

In the example of FIG. 5C, it can be seen that abscissa axis 548 horizontally bisects side portion 543 of housing 540A such that abscissa axis 548 lies on plane 551. It can be seen that in the example of FIG. 5C, plane 551 demarcates a frontward part of side portion 543 from a rearward part of side portion 543. In the example of FIG. 5C, it can be seen that applicate axis 550 horizontally bisects side portion 543 of housing 540A such that applicate axis 550 lies on plane 552. It can be seen that in the example of FIG. 5C, plane 552 demarcates a leftward part of side portion 543 from a rightward part of side portion 543.

In the example of FIG. 5C, it can be seen that applicate axis 550 extends through an electrically conductive coil center point of electrically conductive coils 545A and 545B. In this manner, electrically conductive coil 545A is shaped to substantially conform with inner surface 544 around a first electrically conductive coil center point, electrically conductive coil 545B is shaped to substantially conform with inner surface 544 around a second electrically conductive coil center point, and that the first and second electrically conductive center points are on an that horizontally bisects side portion 543 of housing 540A.

In the example of FIG. 5C, it can be seen that abscissa axis 548 extends through an electrically conductive coil center point of electrically conductive coils 546A and 546B. In this manner, electrically conductive coil 546A is shaped to substantially conform with inner surface 544 around a third electrically conductive coil center point, electrically conductive coil 546B is shaped to substantially conform with inner surface 544 around a fourth electrically conductive coil center point, and that the third and fourth electrically conductive center points are on an that horizontally bisects side portion 543 of housing 540A. In the example of FIG. 5C, it can be seen that ordinate axis 549 extends through an electrically conductive coil center point of electrically conductive coils 547A and 547B. In this manner, electrically conductive coils 547A and 547B are wound around a vertical axis of housing 540A.

In the example of FIG. 5C, it can be seen that electrically conductive coil 546A partially overlaps electrically conductive coils 545A and 545B. In the example of FIG. 5C, it can be seen that electrically conductive coil 546B partially overlaps electrically conductive coils 545A and 545B. In the example of FIG. 5C, it can be seen that electrically conductive coil 547A partially overlaps electrically conductive coils 545A, 545B, 546A, and 546B. In the example of FIG. 5C, it can be seen that electrically conductive coil 547B partially overlaps electrically conductive coils 545A, 545B, 546A, and 546B. Configuration of electrically conductive coils such that they partially overlap in a particular manner may allow for reduced interference, cross-talk, and/or the like between partially overlapping coils while allowing the coils to be in near proximity, allowing the coils conform to the shape of the housing, and/or the like. Even though electrically conductive coils 546A and 546B are illustrated as partially overlapping electrically conductive coils 545A and 545B in a particular manner, and electrically conductive coils 547A and 547B are illustrated as partially overlapping electrically conductive coils 545A, 545B, 546A, and 546B in a particular manner, it should be understood that electrically conductive coils may partially overlap in other manners, such as those described regarding FIGS. 7A-7D.

In the example of FIG. 5C, at least part of an electronic apparatus may be placed into a space contained by inner surface 544. In this manner the at least part of the electronic apparatus may receive energy from electrically conductive coil pairs 540B, 540C, and 540D when electrically conductive coil pairs 40B, 540C, and 540D are excited. In some circumstances, the electronic apparatus may receive more energy from electrically conductive coil pair 540B depending on the orientation of the electronic apparatus. In other circumstances, the electronic apparatus may receive more energy from electrically conductive coil pair 540C and/or electrically conductive coil pair 540D depending on the orientation of the electronic apparatus.

Even though FIGS. 5A-5C illustrate apparatuses having a housing with a cylindrical configuration, it should be understood that any configuration of housing may be utilized. For example, a housing with a bowl configuration may be utilized similar as described regarding FIGS. 1A-1E.

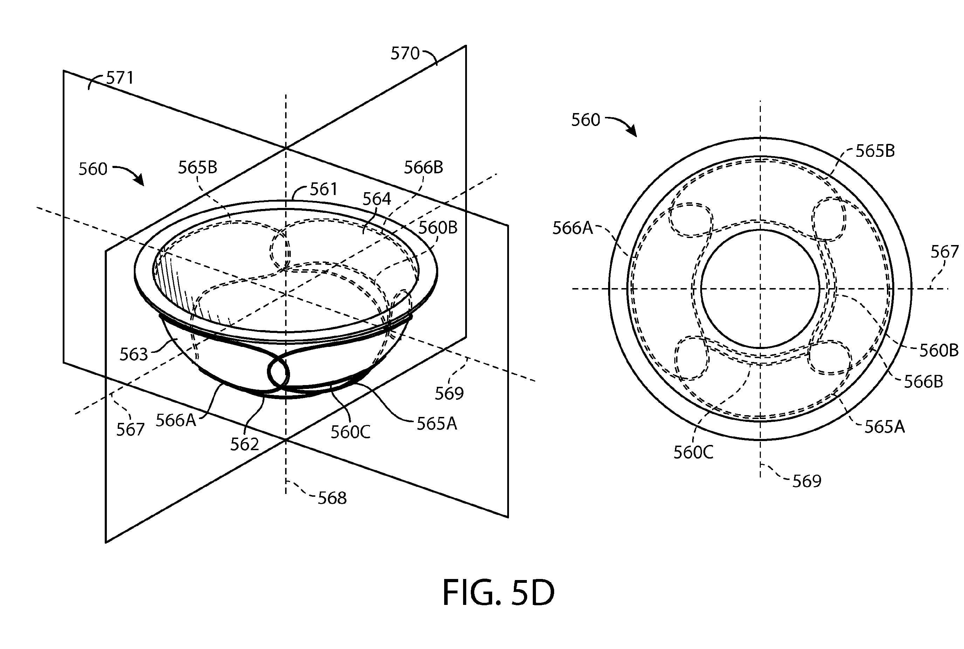

The example of FIG. 5D illustrates a perspective and a top down view of apparatus 560. Apparatus 560 comprises a housing 560A, first electrically conductive coil pair 560B, and second electrically conductive coil pair 560C. Even though it is not illustrated, it should be understood that in the example of FIG. 5B, electrically conductive coil pairs 560B and 560C each further comprise a first and a second terminal similar to electrically conductive coil pair 500B of FIG. 5A. It should be understood that in the example of FIG. 5D, electrically conductive coil pairs 560B and 560C are similar as described regarding FIGS. 4A-4C, FIG. 5A-5C, and/or the like. It can be seen in the example of FIG. 5D that housing 560A comprises a bowl configuration. It can be seen in the example of FIG. 5D that housing 560A comprises top portion 561, bottom portion 562, side portion 563, and inner surface 564. It can be seen in the example of FIG. 5D that first electrically conductive coil pair 560B comprises first electrically conductive coil 565A and second electrically conductive coil 565B. It can be seen in the example of FIG. 5D that second electrically conductive coil pair 560C comprises third electrically conductive coil 566A and fourth electrically conductive coil 566B. It can be seen in the example of FIG. 5D that electrically conductive coil pair 560B is coupled to housing 560A outside of inner surface 564, and that electrically conductive coils 565A and 565B are shaped to substantially conform to inner surface 564. It can be seen in the example of FIG. 5D that electrically conductive coil pair 560C is coupled to housing 560A outside of inner surface 564, and that electrically conductive coils 566A and 566B are shaped to substantially conform to inner surface 564.

As previously described, various axes may bisect a housing. For example, FIG. 5D illustrates abscissa axis 567, ordinate axis 568, and applicate axis 569 which intersect at the approximate geometric center of housing 560A. In this manner, abscissa axis 567, ordinate axis 568, and applicate axis 569 bisect housing 560A. In the example of FIG. 5D., it can be seen that abscissa axis 567 is a horizontal axis that is perpendicular to ordinate axis 568 and applicate axis 569, ordinate axis 568 is a vertical axis that is perpendicular to abscissa axis 567 and applicate axis 569, and applicate axis 569 is a horizontal axis that is perpendicular to abscissa axis 567 and ordinate axis 568.

In the example of FIG. 5D, it can be seen that abscissa axis 567 horizontally bisects side portion 563 of housing 560A such that abscissa axis 567 lies on plane 570. It can be seen that in the example of FIG. 5D, plane 570 demarcates a frontward part of side portion 563 from a rearward part of side portion 563. In the example of FIG. 5D, it can be seen that applicate axis 569 horizontally bisects side portion 563 of housing 560A such that applicate axis 560 lies on plane 571. It can be seen that in the example of FIG. 5D, plane 571 demarcates a leftward part of side portion 563 from a rightward part of side portion 563.

In the example of FIG. 5D, it can be seen that applicate axis 569 extends through an electrically conductive coil center point of electrically conductive coils 565A and 565B. In this manner, electrically conductive coil 565A is shaped to substantially conform with inner surface 564 around a first electrically conductive coil center point, electrically conductive coil 565B is shaped to substantially conform with inner surface 564 around a second electrically conductive coil center point, and that the first and second electrically conductive center points are on an axis that horizontally bisects side portion 563 of housing 560A.

In the example of FIG. 5D, it can be seen that abscissa axis 567 extends through an electrically conductive coil center point of electrically conductive coils 566A and 566B. In this manner, electrically conductive coil 566A is shaped to substantially conform with inner surface 564 around a third electrically conductive coil center point, electrically conductive coil 566B is shaped to substantially conform with inner surface 564 around a fourth electrically conductive coil center point, and that the third and fourth electrically conductive center points are on an axis that horizontally bisects side portion 563 of housing 560A.

In the example of FIG. 5D, it can be seen that electrically conductive coil 566A partially overlaps electrically conductive coils 565A and 565B. In the example of FIG. 5B, it can be seen that electrically conductive coil 566B partially overlaps electrically conductive coils 565A and 565B. Configuration of electrically conductive coils such that they partially overlap in a particular manner may allow for reduced interference, cross-talk, and/or the like between partially overlapping coils while allowing the coils to be in near proximity, allowing the coils conform to the shape of the housing, and/or the like. Even though electrically conductive coils 566A and 566B are illustrated as partially overlapping electrically conductive coils 565A and 565B in a particular manner, it should be understood that electrically conductive coils may partially overlap in other manners, such as those described regarding FIGS. 7A-7D.

In the example of FIG. 5D, at least part of an electronic apparatus may be placed into a space contained by inner surface 564. In this manner the at least part of the electronic apparatus may receive energy from electrically conductive coil pairs 560B and 560C when electrically conductive coil pairs 560B and 560C are excited. In some circumstances, the electronic apparatus may receive more energy from electrically conductive coil pair 560B depending on the orientation of the electronic apparatus. In other circumstances, the electronic apparatus may receive more energy from electrically conductive coil pair 560C depending on the orientation of the electronic apparatus.

In some circumstances, it may be desirable to configure one or more electrically conductive coil pairs to be coupled to a housing absent from the housing. For example, such a configuration of electrically conductive coil pairs may be coupled to the housing at a later time.

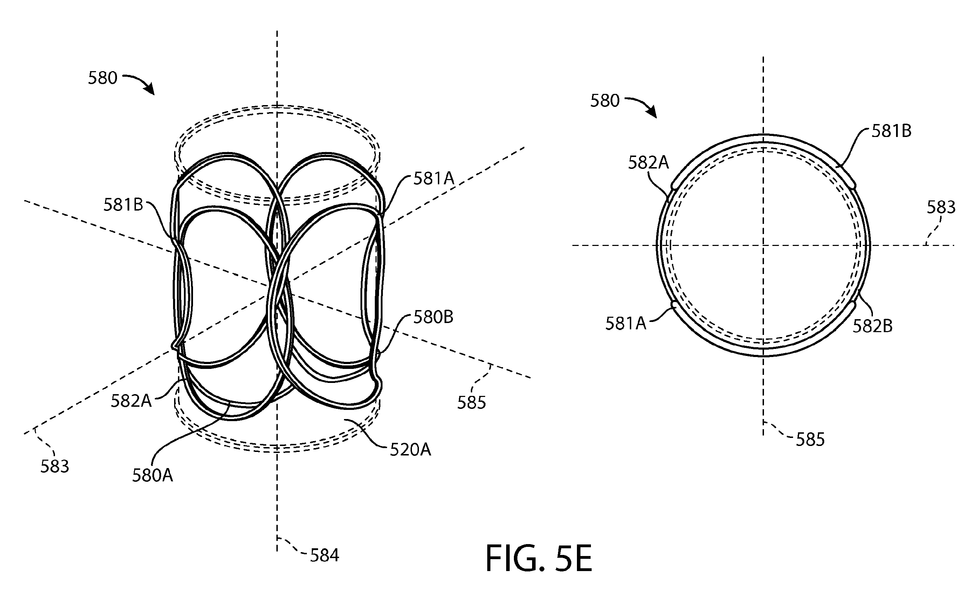

The example of FIG. 5E illustrates a perspective and a top down view of apparatus 580. Apparatus 580 comprises first electrically conductive coil pair 580A and second electrically conductive coil pair 580B. Even though it is not illustrated, it should be understood that in the example of FIG. 5B, electrically conductive coil pairs 580A and 580B each further comprise a first and a second terminal similar to electrically conductive coil pair 500B of FIG. 5A. It should be understood that, in the example of FIG. 5B, electrically conductive coil pairs 580A and 580B are similar as described regarding FIGS. 4A-4C, FIGS. 5A-5D, and/or the like. It can be seen in the example of FIG. 5E that first electrically conductive coil pair 580A comprises first electrically conductive coil 581A and second electrically conductive coil 581B. It can be seen in the example of FIG. 5E that second electrically conductive coil pair 580B comprises third electrically conductive coil 582A and fourth electrically conductive coil 582B. It can be seen in the example of FIG. 5E that electrically conductive coil pairs 580A and 580B are configured to be coupled to a cylindrically configured housing similar as described regarding FIGS. 5A-5C outside of an inner surface of a side portion of the housing, depicted as a dashed outline that illustrates the contouring of the coils.

In the example of FIG. 5E, it can be seen that abscissa axis 583 is a horizontal axis that is perpendicular to ordinate axis 584 and applicate axis 585, ordinate axis 584 is a vertical axis that is perpendicular to abscissa axis 583 and applicate axis 585, and applicate axis 585 is a horizontal axis that is perpendicular to abscissa axis 583 and ordinate axis 584. In the example of FIG. 5E, it can be seen that applicate axis 585 extends through an electrically conductive coil center point of electrically conductive coils 581A and 581B. In the example of FIG. 5E, it can be seen that abscissa axis 583 extends through an electrically conductive coil center point of electrically conductive coils 582A and 582B.

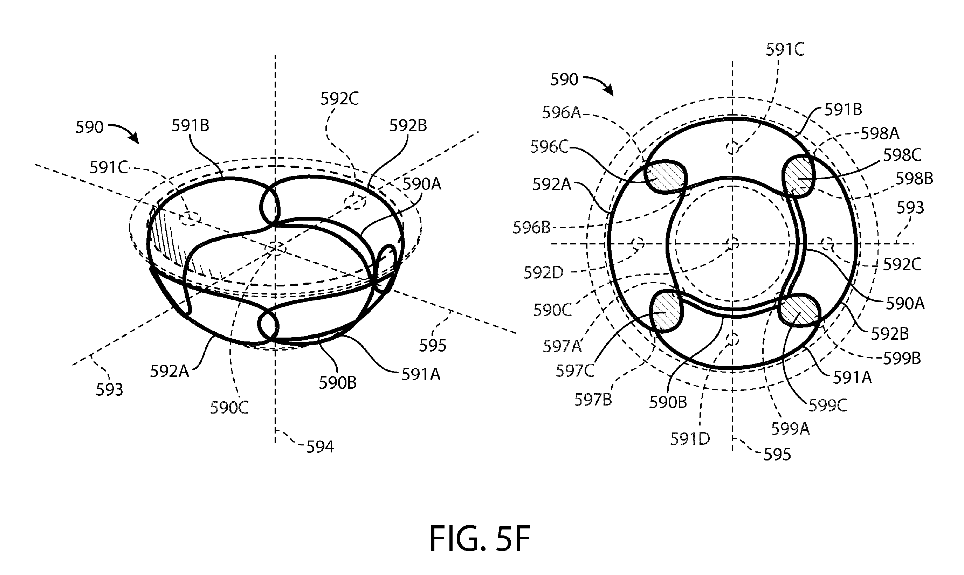

The example of FIG. 5F illustrates a perspective and a top down view of apparatus 590. Apparatus 590 comprises first electrically conductive coil pair 590A and second electrically conductive coil pair 590B. Even though it is not illustrated, it should be understood that in the example of FIG. 5B, electrically conductive coil pairs 590A and 590B each further comprise a first and a second terminal similar to electrically conductive coil pair 500B of FIG. 5A. It should be understood that, in the example of FIG. 5F, electrically conductive coil pairs 590A and 590B are similar as described regarding FIGS. 4A-4C, FIGS. 5A-5E, and/or the like. It can be seen in the example of FIG. 5F that first electrically conductive coil pair 590A comprises first electrically conductive coil 591A and second electrically conductive coil 591B. It can be seen in the example of FIG. 5F that second electrically conductive coil pair 590B comprises third electrically conductive coil 592A and fourth electrically conductive coil 592B. It can be seen in the example of FIG. 5F that electrically conductive coil pairs 590A and 590B are configured to be coupled to a bowl configured housing similar as described regarding FIG. 5D outside of an inner surface of a side portion of the housing depicted as a dashed outline that illustrates the contouring of the coils.

In the example of FIG. 5F, it can be seen that abscissa axis 593 is a horizontal axis that is perpendicular to ordinate axis 594 and applicate axis 595, ordinate axis 594 is a vertical axis that is perpendicular to abscissa axis 593 and applicate axis 595, and applicate axis 595 is a horizontal axis that is perpendicular to abscissa axis 593 and ordinate axis 594. In the example of FIG. 5F, it can be seen that applicate axis 595 extends through an electrically conductive coil center point of electrically conductive coils 591A and 591B. For example, it can be seen that applicate axis 595 extends through region 591C which is a region comprising the approximate electrically conductive coil center point of electrically conductive coil 591B, and through region 591D which is a region comprising the approximate electrically conductive coil center point of electrically conductive coil 591A. In the example of FIG. 5F, it can be seen that abscissa axis 593 extends through an electrically conductive coil center point of electrically conductive coils 592A and 592B. For example, it can be seen that abscissa axis 593 extends through region 592C which is a region comprising the approximate electrically conductive coil center point of electrically conductive coil 592B, and through region 592D which is a region comprising the approximate electrically conductive coil center point of electrically conductive coil 592A. In the example of FIG. 5F, it can be seen that abscissa axis 593, ordinate axis 594, and applicate axis 595 intersect at point 590C. It can be seen that point 590C is located at the approximate geometric center of the space encircled by apparatus 590. In this manner, point 590C may be referred to as an apparatus center point.

In the example of FIG. 5F, it can be seen that electrically conductive coil 592A partially overlaps electrically conductive coils 591A and 591B. For example, it can be seen that electrically conductive coil 592A partially overlaps electrically conductive coil 591A at regions 597A and 597B, and partially overlaps electrically conductive coil 591B at regions 596A and 596B. In the example of FIG. 5F, it can be seen that electrically conductive coil 592B partially overlaps electrically conductive coils 591A and 591B. For example, it can be seen that electrically conductive coil 592B partially overlaps electrically conductive coil 591A at regions 599A and 599B, and partially overlaps electrically conductive coil 591B at regions 598A and 598B.

In the example of FIG. 5F, it can be seen that regions are bounded by the electrically conductive coils between the regions where the electrically conductive coils partially overlap. For example, it can be seen that region 596C is bounded by a portion of electrically conductive coil 592A and a portion of electrically conductive coil 591B between regions 596A and 596B where electrically conductive coils 592A and 591B partially overlap. Furthermore, it can be seen that in the example of FIG. 5F that region 597C is bounded by a portion of electrically conductive coil 592A and a portion of electrically conductive coil 591A between regions 597A and 597B where electrically conductive coils 592A and 591A partially overlap. Additionally, it can be seen that in the example of FIG. 5F that region 598C is bounded by a portion of electrically conductive coil 592B and a portion of electrically conductive coil 591B between regions 598A and 598B where electrically conductive coils 592B and 591B partially overlap. Furthermore, it can be seen that in the example of FIG. 5F that region 599C is bounded by a portion of electrically conductive coil 592B and a portion of electrically conductive coil 591A between regions 599A and 599B where electrically conductive coils 592B and 591A partially overlap. It can be seen that in the example of FIG. 5F, regions 596C, 597C, 598C, and 599C have shapes that may conform to the shape of regions of a housing. For example, it can be seen that the shape of regions 596C, 597C, 598C, and 599C may conform to regions of a bowl configured housing similarly as described regarding FIG. 5D.

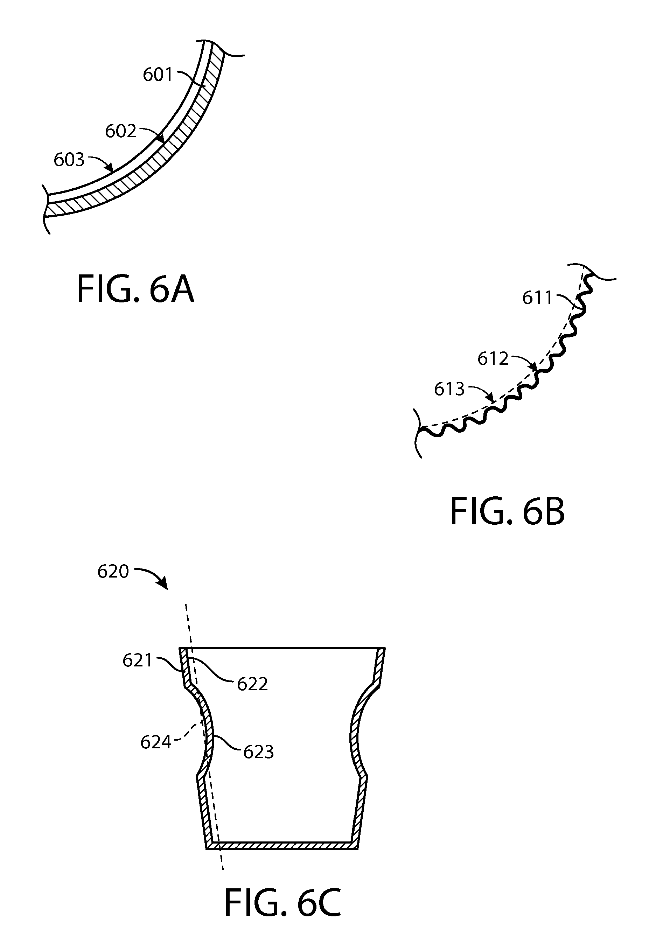

FIGS. 6A-6C are diagrams illustrating inner surface contours according to at least one example embodiment. The examples of FIGS. 6A-6C are merely examples and do not limit the scope of the claims. For example, the type of surface may vary, the shape of the surface may vary, the material of the surface may vary, and/or the like.

As previously described, an electrically conductive coil may be shaped to substantially conform to a contour of an inner surface that is opposite a part of the housing to which the electrically conductive coil is coupled. It should be understood that a contour of an inner surface may fail to directly mimic an inner surface. For example, a contour of an inner surface may correspond to a curve fitted approximation of an inner surface.

FIG. 6A illustrates a portion of side portion 601 of a housing. Side portion 601 comprises inner surface 602 and surface covering 603. It can be seen that surface covering 603 follows the general contour of inner surface 602. Surface covering may be any material covering inner surface 602, such as a polymer lining, a non-slip surface, and/or the like. In this manner, an electrically conductive coil shaped to substantially conform to the contour of surface covering 603 may be considered to conform to the contour of inner surface 602.

FIG. 6B illustrates a portion of side portion 621 of a housing. Side portion 611 comprises inner surface 612. The example of FIG. 6B further illustrates curve fitted approximation 613. It should be understood that in the example of FIG. 6B, curve fitted approximation 613 is a curve fitted approximation of inner surface 612. In this manner, an electrically conductive coil shaped to substantially conform to the contour of curve fitted approximation 613 may be considered to conform to the contour of inner surface 612.

FIG. 6C illustrates a cross section view housing 620. Housing 620 comprises side portion 621. Side portion 621 comprise inner surface 622 and protrusion 623. It should be understood that protrusion 623 is a support structure. For example, in circumstances where housing 621 comprises a cup-holder apparatus, protrusion 623 may support and/or secure a beverage container. The example of FIG. 6C further illustrates curve fitted approximation 624. It should be understood that in the example of FIG. 6C, curve fitted approximation 624 is a curve fitted approximation of inner surface 622. In this manner, an electrically conductive coil shaped to substantially conform to the contour of curve fitted approximation 624 may be considered to conform to the contour of inner surface 622.

FIGS. 7A-7D are diagrams illustrating partial overlapping of electrically conductive coils according to at least one example embodiment. The examples of FIGS. 7A-7D are merely examples and do not limit the scope of the claims. For example, the number of electrically conductive coils may vary, the size of the electrically conductive coils may vary, the shape of the electrically conductive coils may vary, and/or the like.

As previously described, in some circumstances an electrically conductive coil may partially overlap another electrically conductive coil. Such a partial overlap may take a variety of forms. For example, the overlap may be at substantially perpendicular angles, the overlap may comprise crossing at more than one point, the crossing may be at substantially perpendicular angles, and/or the like. Substantially perpendicular angles may refer to angles that are within a threshold deviational tolerance, a manufacturing tolerance, and/or the like of perpendicular. For example, a manufacturing tolerance may allow for an angle to be perpendicular within plus or minus 1 degree, 5 degrees, a fraction of a degree, and/or the like. In this manner, an angle may be substantially perpendicular without being exactly perpendicular. Crossing and/or overlapping coils at substantially perpendicular angles has the mechanical effect of limiting adjacency of the coils to a minimum. The technical effect of limiting the adjacency between coils may be less cross-talk and/or coupling when the coils are excited. For example, adjacency of coils such that the coils are parallel may cause increased coupling and/or cross-talk. Such technical effect should not be construed as limiting the scope of the claims.

The example of FIG. 7A illustrates a top down view of electrically conductive coils 701 and 702. It can be seen that electrically conductive coil 702 partially overlaps electrically conductive coil 701 at a first crossing point 703 and second crossing point 704. In this manner, electrically conductive coil 702 partially overlaps electrically conductive coil 701 by crossing electrically conductive coil 701 at two points.

The example of FIG. 7B illustrates a side elevation view of electrically conductive coils 711 and 712. It can be seen that electrically conductive coil 712 partially overlaps electrically conductive coil 711 at crossing point 713. It can be seen that, at crossing point 713 that coil 711 is positioned between coil 712 and housing 714. It should be understood that in the example of FIG. 7B electrically conductive coils 711 and 712 are coupled to a portion of housing 714. It can be seen that electrically conductive coil is not in contact with surface 715 of housing 714. In this manner, an electrically conductive coil may be coupled to a housing without necessarily being in contact with a housing. It can be seen that, at crossing point 713, that both coils 711 and 712 are oriented such that the conductors of both coils align with housing 714.

The example of FIG. 7C illustrates a side cross section view of electrically conductive coils 721 and 722. It can be seen that in the example of FIG. 7C that electrically conductive coil 721 partially overlaps electrically conductive coil 722 at crossing point 723. It can be seen in the example of FIG. 7C that electrically conductive coil 721 crosses electrically conductive coil 722 at a perpendicular angle.

The example of FIG. 7D illustrates a side cross section view of electrically conductive coils 731 and 732. It can be seen that in the example of FIG. 7C that electrically conductive coil 731 partially overlaps electrically conductive coil 732 in a manner that the windings of electrically conductive coil are interleaved with the windings of electrically conductive coil 732. It can be seen in the example of FIG. 7C that electrically conductive coil 731 crosses electrically conductive coil 732 at a perpendicular angle.

FIGS. 8A-8C are diagrams illustrating driver circuits according to at least one example embodiment. The examples of FIGS. 8A-8C are merely examples and do not limit the scope of the claims. For example, the number of driver circuits may vary, the type of driver circuits may vary, the configuration of the driver circuits may vary, and/or the like.

As previously described, an apparatus may be configured with electrically conductive coils to transfer power between the apparatus and a separate apparatus. Such electrically conductive coils may utilize a driver circuit to excite the coils. As previously described, in circumstances such as these, it may be desirable to configure the apparatus such that resonant coupling may be achieved between at least one coil comprised by the apparatus, and a coil comprised by the separate apparatus. For example, resonant coupling may allow power coupling between two coils despite weak mutual coupling between the coils. This may allow energy transfer at a greater distance between the two coils, less optimal alignment of the flux compared to a traditional inductive coupling arrangement, and/or the like. In circumstances such as these, resonant coupling may be implemented by way of a driver circuit configured to actuate at least one electrically conductive coil and/or coil pair.

FIG. 8A illustrates driver circuit 800. Circuit 800 comprises switches Sw1 and Sw2, inductors L1, L2, and L4, and capacitor Ctune. In the example of FIG. 8A, L4 and Ctune form a parallel resonant driver circuit. In the example of FIG. 8A, Switches Sw1 and Sw2 are alternately grounded at a frequency of 125 kHz such that circuit 800 is excited. When S1 is grounded the current ramps up slightly in L1 and energy is delivered to the driver circuit from L2. Conversely, when S2 is grounded the current ramps up slightly in L2 and energy is delivered to the driver circuit from L2. As the value of L1 and L2 are increased, the current approaches DC with decreasing perturbations from the cyclic charging and discharging. In the example of FIG. 8A, inductor L4 is constructed with an open magnetic path that couples to coils in circuits that receive power, such as a coil in an electronic device. It should be understood that even though inductor L4 is illustrated as a 5 µH inductor, inductor L4 may be any electrically conductive coil and/or electrically conductive coil pair, such as previously described.

In circumstances where an apparatus comprises multiple electrically conductive coils and/or multiple electrically conductive coil pairs, it may be desirable to preclude simultaneous actuation of driver circuits utilized to drive the coils, limit actuation to a single coil and/or coil pairs, and/or the like. For example, driving multiple coils and/or coil pairs simultaneously may cause resonant magnetic coupling between the coils. For instance, driving the coils simultaneously may causes one net resultant direction (or flux pattern) which may be undesired.

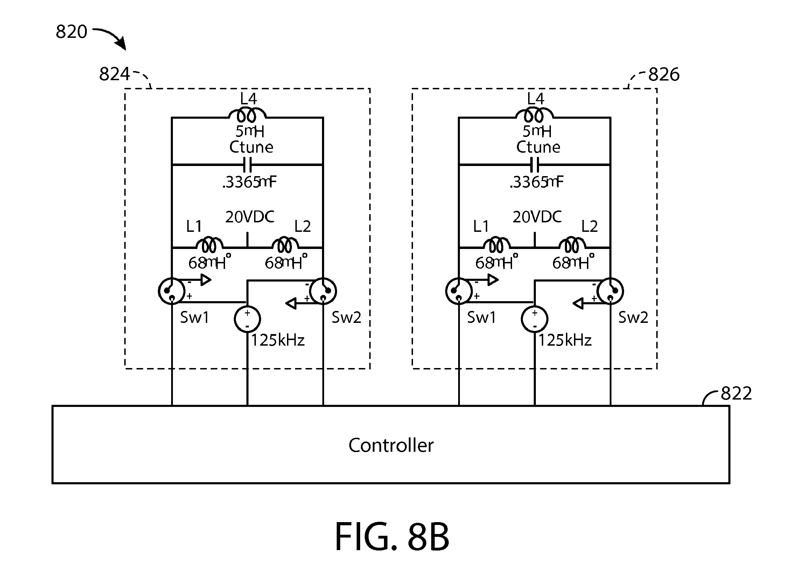

FIG. 8B illustrates driver circuits 824 and 826. Driver circuits 824 and 826 are controlled by way of controller 822. It should be understood that driver circuits 824 and 826 are similar as described regarding driver circuit 800 of FIG. 8A. Controller 822 may comprise a control circuit such as a processor, a microcontroller, a state machine, and/or the like. Controller 822 is configured to preclude simultaneous actuation of driver circuits 824 and 826. For example, controller 822 may actuate driver circuits 824 and 826 in a sequential manner to create magnetic flux in inductor L4 of driver circuit 824 and inductor L4 of driver circuit 826 at different times. When driver circuit 824 is not activated, switches Sw1 and Sw2 of driver circuit 824 are both connected to ground through a low impedance to prevent resonant magnetic coupling to driver circuit 826 when driver circuit 826 is active. Similarly, when driver circuit 86 is not activated, switches Sw1 and Sw2 of driver circuit 826 are both connected to ground through a low impedance to prevent resonant magnetic coupling to driver circuit 824 when driver circuit 824 is active.

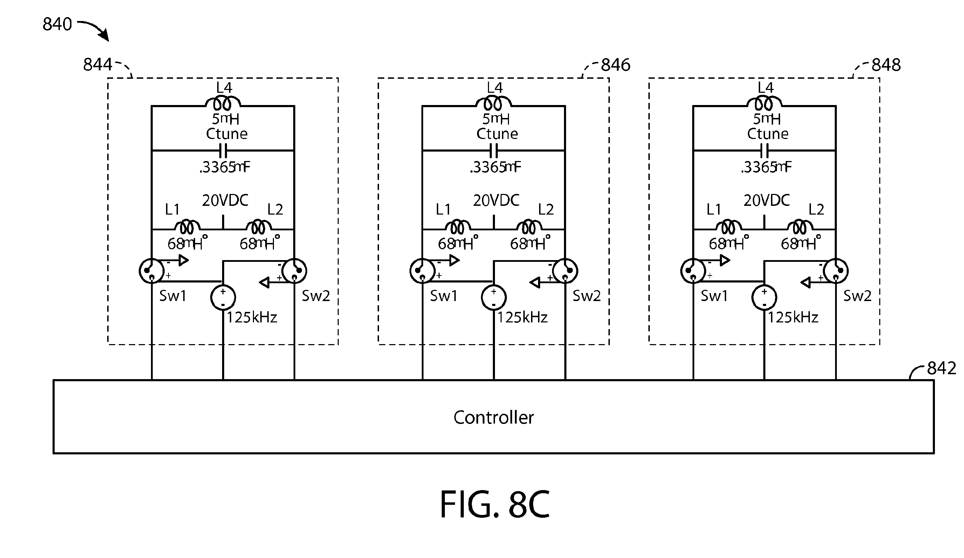

As previously described, in some circumstances, an apparatus may comprise at least three coils and/ or coil pairs. FIG. 8C illustrates driver circuits 844, 846, and 848. Driver circuits 844, 846, and 848 are controlled by way of controller 842. It should be understood that driver circuits 844, 846, and 848 are similar as described regarding driver circuit 800 of FIG. 8A. Controller 842 may comprise a control circuit such as a processor, a microcontroller, a state machine, and/or the like. Controller 842 is configured to preclude simultaneous actuation of driver circuits 844, 846, and 848. For example, controller 842 may actuate driver circuits 844, 846, and 848 in a sequential manner to create magnetic flux in inductor L4 of driver circuit 844, inductor L4 of driver circuit 844, and inductor L4 of driver circuit 848 at different times. When driver circuit 844 is not activated, switches Sw1 and Sw2 of driver circuit 844 are both connected to ground through a low impedance to prevent resonant magnetic coupling to driver circuit 846 when driver circuit 846 is active and/or to driver 848 when driver circuit 848 is active. Similarly, when driver circuit 846 is not activated, switches Sw1 and Sw2 of driver circuit 846 are both connected to ground through a low impedance to prevent resonant magnetic coupling to driver circuit 844 when driver circuit 844 is active and/or to driver 848 when driver circuit 848 is active. Additionally, when driver circuit 848 is not activated, switches Sw1 and Sw2 of driver circuit 848 are both connected to ground through a low impedance to prevent resonant magnetic coupling to driver circuit 844 when driver circuit 844 is active and/or to driver 846 when driver circuit 846 is active.

In another example embodiment, a single driver circuit may be used to drive multiple coils. In such an embodiment, the single driver circuit may be switched between the coils by way of a multi-pole transfer switch. Separate switches may be provided to provide the un-energized or under energized coils a low impedance path to ground.

One or more example embodiments may be implemented in software, hardware, application logic or a combination of software, hardware, and application logic. The software, application logic, and/or hardware may reside on the apparatus, a separate device, or a plurality of separate devices. If desired, part of the software, application logic, and/or hardware may reside on the apparatus, part of the software, application logic and/or hardware may reside on a separate device, and part of the software, application logic, and/or hardware may reside on a plurality of separate devices. In an example embodiment, the application logic, software or an instruction set is maintained on any one of various computer-readable media.

Although various aspects of the present subject matter are set out in the independent claims, other aspects of the present subject matter comprise other combinations of features from the described example embodiments and/or the dependent claims with the features of the independent claims, and not solely the combinations explicitly set out in the claims.

It is also noted herein that while the above describes example embodiments, these descriptions should not be viewed in a limiting sense. Rather, there are variations and modifications which may be made without departing from the scope of the present subject matter.

## Claims

1. An apparatus, comprising:
a first electrically conductive coil pair configured to be coupled to a housing outside of an inner surface of a side portion of the housing, the housing comprising a top portion and the side portion, the side portion extending upward to the top portion, the top portion being open, the first electrically conductive coil pair comprising:
a first electrically conductive coil that is shaped to substantially conform with the inner surface around a first electrically conductive coil center point; and
a second electrically conductive coil that is shaped to substantially conform with the inner surface around a second electrically conductive coil center point, the first electrically conductive coil center point and the second electrically conductive coil center point being on a first axis that horizontally bisects the side portion of the housing;
a second electrically conductive coil pair configured to be coupled to the housing outside of the inner surface comprising:
a third electrically conductive coil that is shaped to substantially conform with the inner surface around a third electrically conductive coil center point such that the third electrically conductive coil partially overlaps with the first electrically conductive coil and partially overlaps with the second electrically conductive coil; and
a fourth electrically conductive coil that is shaped to substantially conform with the inner surface around a fourth electrically conductive coil center point such that the fourth electrically conductive coil partially overlaps with the first electrically conductive coil and partially overlaps with the second electrically conductive coil, the third electrically conductive coil center point and the fourth electrically conductive coil center point being on a second axis that horizontally bisects the side portion of the housing, the second axis intersects the first axis.

2. The apparatus of Claim 1, wherein the first electrically conductive coil is directly electrically coupled to the second electrically conductive coil.

3. The apparatus of Claims 1-2, wherein the third electrically conductive coil is directly electrically coupled to the fourth electrically conductive coil.

4. The apparatus of Claims 1-3, wherein the first axis is a horizontal axis.

5. The apparatus of Claims 1-4, wherein the second axis is a horizontal axis.

6. The apparatus of Claims 1-5, wherein the first axis is perpendicular to the second axis.

7. The apparatus of Claims 1-6, wherein the side portion is tapered inward from the top portion to form at least part of a bowl.

8. The apparatus of Claims 1-7, wherein the inner surface is an inner surface of the bowl.

9. The apparatus of Claims 1-8, further comprising:
a first driver circuit that is configured to actuate the first electrically conductive coil pair; and
a second driver circuit that is configured to actuate the second electrically conductive coil pair.

10. The apparatus of Claims 1-9, further comprising a control circuit that is configured to preclude simultaneous actuation by the first driver circuit and the second driver circuit.

11. The apparatus of Claims 1-10, further comprising a fifth electrically conductive coil that is wound around a vertical axis of the housing.

12. The apparatus of Claims 1-11, further comprising a sixth electrically conductive coil that is wound around the vertical axis of the housing and electrically coupled with the fifth electrically conductive coil such that a third electrically conductive coil pair comprises the fifth electrically conductive coil and the sixth electrically conductive coil.

13. The apparatus of Claims 1-12, wherein the fifth electrically conductive coil partially overlaps with the first electrically conductive coil, partially overlaps with the second electrically conductive coil, partially overlaps with the third electrically conductive coil, and partially overlaps with the fourth electrically conductive coil.

14. The apparatus of Claims 1-13, further comprising a third driver circuit that is configured to actuate the third electrically conductive coil pair.

15. The apparatus of Claims 1-14, further comprising a control circuit that is configured to preclude simultaneous actuation by the first driver circuit, the second driver circuit, and the third driver circuit.
